# EUROPÄISCHE PATENTSCHRIFT

(11) **EP 3 844 627 B1**
(45) Veröffentlichungstag und Bekanntmachung des Hinweises auf die Patenterteilung: **13.08.2025**
(21) Anmeldenummer: 19755397.7
(22) Anmeldetag: 21.08.2019
(51) Int. Cl.: G06F 13/38, G06F 13/42, H04L 69/08

(54) **STEUER- UND DATENÜBERTRAGUNGSANLAGE ZUR UNTERSTÜTZUNG VERSCHIEDENER KOMMUNIKATIONSPROTOKOLLE UND EIN ADAPTERMODUL**
CONTROL AND DATA TRANSFER SYSTEM FOR SUPPORTING DIFFERENT COMMUNICATION PROTOCOLS AND AN ADAPTER MODULE
INSTALLATION DE COMMANDE ET DE TRANSMISSION DE DONNÉES DESTINÉE À SOUTENIR DIFFÉRENTS PROTOCOLES DE COMMUNICATION ET MODULE D'ADAPTATEUR

(30) Priorität: 27.08.2018 BE 201805589
(43) Veröffentlichungstag der Anmeldung: 07.07.2021
(73) Patentinhaber: Phoenix Contact GmbH & Co. KG, 32825 Blomberg (DE)
(72) Erfinder: ENGEL, Andreas, 32816 Schieder-Schwalenberg (DE); MARSCHNER, Martin, 31812 Bad Pyrmont (DE)
(74) Vertreter: Blumbach · Zinngrebe Patentanwälte PartG mbB
(86) Internationale Anmeldenummer: PCT/EP2019/072393
(87) Internationale Veröffentlichungsnummer: WO 2020/043572

(56) Entgegenhaltungen:
- EP-A1- 2 958 028
- US-A1- 2005 208 967
- US-A1- 2010 262 744
- US-A1- 2011 072 185
- US-A1- 2016 328 347

## Beschreibung

### Beschreibung

Die Erfindung betrifft eine Steuer- und Datenübertragungsanlage zur Unterstützung verschiedener Kommunikationsprotokolle.

Insbesondere auf dem Gebiet der Automatisierungstechnik kann es immer wieder vorkommen, dass unterschiedliche Bussysteme, die jeweils unterschiedliche Kommunikationsprotokolle beziehungsweise Busprotokolle benötigen, an Steuerungen angeschlossen werden müssen. Ein bekannter Lösungsansatz ist, dass für jedes Bussystem eine besondere Steuerung entwickelt wird, die jedoch nur mit dem speziellen Bussystem kommunizieren kann.

Aus der EP 0 391 157 A2 ist eine Anordnung zum Verbinden einer Verarbeitungseinheit mit einem Bus über ein anpassbares Schnittstellenmodul bekannt. Das Schnittstellenmodul weist einen Mikroprozessor, eine Busschnittstelle zum Anschluss an einen Bus sowie eine HOST-Schnittstelle zur Verbindung mit einer Verarbeitungseinheit auf. Für den Betrieb des Mikroprozessors ist ein Programm vorgesehen, das einen Datenaustausch zwischen dem Bus und dem Schnittstellenmodul sowie der Verarbeitungseinheit ermöglicht. Das Schnittstellenmodul kann als steckbare Einheit ausgeführt sein.

Aus der US 2008/0013569 A1 ist ein universeller Controller bekannt, der eine Datenkommunikation zwischen externen elektronischen Geräten unter Verwendung eines aus einer Vielzahl von Kommunikationsprotokollen ausgewählten Kommunikationsprotokolls ermöglicht. Der universelle Controller weist eine Bus-Übersetzungseinrichtung auf, die mit einem ersten anschließbaren Gerät Daten austauschen kann. Ferner ist eine Feldschnittstelle vorgesehen, die mehrere Ein-/Ausgangsports aufweisen kann, an die wenigstens ein zweites externes Gerät angeschlossen werden kann. Mit der Feldschnittstelle ist ein Protokoll-Firmwaremodul verbunden, welches mehrere Protokolltreiber aufweist, die jeweils einem anderen Kommunikationsprotokoll entsprechen. Unter Ansprechen auf vom ersten Gerät empfangenen Daten spezifiziert die Bus-Übersetzungseinrichtung ein gewünschtes Kommunikationsprotokoll aus der Vielzahl von Kommunikationsprotokollen, um dem Protokoll-Firmwaremodul zu ermöglichen, eine Datenkommunikation zwischen dem ersten und zweiten Gerät unter Anwendung des Protokolltreibers aufzubauen, der dem gewünschten Kommunikationsprotokoll entspricht.

Die US 2005/208967 A1 betrifft ein tragbares universelles Datenspeichergerät, das einen universellen Portadapter zum Anschluss an ein persönliches elektronisches Gerät umfasst, welches einen Speicher zum Speichern einer Vielzahl von Kommunikationsprotokollen, einen zweiten Speicher zum Speichern von Gerätedaten, ein Schnittstellenport-Erkennungsmodul zum Erkennen eines Kommunikationsprotokolls für das persönliche elektronische Gerät und einen Prozessor zum Auswählen des erkannten Kommunikationsprotokolls für das persönliche elektronische Gerät aus der gespeicherten Vielzahl von Kommunikationsprotokollen und zum Herstellen einer Kommunikationsverbindung mit dem persönlichen elektronischen Gerät enthält.

Aus der US 2016/328347 A1 geht ein flexibles Speichersystem hervor. Eine Speicherhauptplatine nimmt an einem geeigneten Anschluss eine Speicheradapterschaltung auf, die für die Protokollübersetzung zwischen einer Hostbusschnittstelle und einer Speicherschnittstelle sorgt und die Weiterleitung bereitstellt, um eine Vielzahl von über die Speicherhauptplatine mit der Speicheradapterschaltung verbindbaren Massenspeichergeräten aufzunehmen.

Die US 2010/262744 A1 beschreibt ein Gerät umfassend einen Verbinder mit ersten und zweiten Signalstiften, die dazu geeignet sind, beim Verbinden des Verbinders mit einem passenden Verbinder eines anderen Geräts eine erste Verbindung unter Verwendung des ersten Signalstifts herzustellen, bevor eine zweite Verbindung unter Verwendung des zweiten Signalstifts hergestellt wird. Das Gerät umfasst ferner eine erste Schaltung, die operativ mit dem ersten Signalstift gekoppelt ist und dazu konfiguriert ist, mindestens drei vorbestimmte Signalmuster zu identifizieren, die von dem anderen Gerät unter Verwendung der ersten Verbindung empfangen werden können, wobei jedes der mindestens drei vorbestimmten Signalmuster einem von mindestens drei vorbestimmten Schnittstellenprotokollen entspricht. weiterhin umfasst das Gerät eine zweite Schaltung, die operativ mit der ersten Schaltung und dem zweiten Signalstift gekoppelt ist und dazu konfiguriert ist, als Reaktion darauf, dass die erste Schaltung ein vorbestimmtes Signalmuster der mindestens drei vorbestimmten Signalmuster identifiziert, mit dem anderen Gerät unter Verwendung von mindestens dem zweiten Signalstift eine Schnittstelle zu bilden, wobei die Schnittstelle zu dem anderen Gerät gemäß einem vorbestimmten Schnittstellenprotokoll erfolgt, das dem vorbestimmten Signalmuster entspricht, wobei das Konfigurieren der zweiten Schaltung als Reaktion darauf, dass die erste Schaltung das vorbestimmte Signalmuster identifiziert, erfolgt, bevor der zweite Signalstift die zweite Verbindung herstellt.

Die US2011/072185 A1 offenbart eine Brücke umfassend eine Hostschnittstelle, über die Daten/Befehle von einem Host empfangen und an diesen übertragen werden, und eine Speichergeräteschnittstelle, über die Daten/Befehle von einem Speichergerät empfangen und an dieses übertragen werden. Die Brücke umfasst ferner einen SDPC, einen Controller und ein Schaltsystem, das vom Controller so konfigurierbar ist, dass es den Protokollkonverter mit der Hostschnittstelle und der Speichergeräteschnittstelle verbindet, wenn das vom Hostgerät verwendete Speichergeräteprotokoll sich von dem vom Speichergerät verwendeten Speichergeräteprotokoll unterscheidet, und die Hostgeräteschnittstelle nicht über den bidirektionalen Protokollkonverter mit der Speichergeräteschnittstelle verbindet, wenn die beiden Speichergeräteprotokolle identisch sind. Die Brücke kann zwei SDPCs umfassen, die jeweils ein anderes Protokoll in das Host-Protokoll und umgekehrt konvertieren, wobei das Schaltsystem so konfigurierbar ist, dass es zwischen den beiden SDPCs umschaltet. Die Brücke kann den SDPC weglassen, wobei das Schaltsystem so konfigurierbar ist, dass es zwischen einem Verbinden der Host-Geräteschnittstelle mit der Speichergeräteschnittstelle und einem Umgehen der Speichergeräteschnittstelle umschaltet.

Der Erfindung liegt die Aufgabe zugrunde, eine Steuer- und Datenübertragungsanlage zu schaffen, mit welcher einem Steuerungsgerät in flexibler, einfacher und kostengünstiger Weise die Kommunikation mit verschiedenen Bussystemen ermöglicht werden kann.

Das oben benannte technische Problem wird durch die Merkmale des Anspruchs 1 gelöst.

Danach ist eine Steuer- und Datenübertragungsanlage zur Unterstützung verschiedener Kommunikationsprotokolle vorgesehen. Die Steuer- und Datenübertragungsanlage weist ein Steuerungsgerät auf, welches folgende Merkmale enthält:
eine Speichereinrichtung, in welcher wenigstens ein erstes, ein zweites und ein drittes Kommunikationsprotokoll speicherbar sind, wobei das erste, das zweite und das dritte Kommunikationsprotokoll verschieden sind,
eine Steuer- und Auswerteeinheit, die zum Ausführen der in der Speichereinrichtung gespeicherten Kommunikationsprotokolle ausgebildet ist, und wenigstens einen ersten Verbinder mit mehreren auswählbaren elektrischen Kontakten.

Angemerkt sei an dieser Stelle, dass es sich bei der Steuer- und Auswerteeinheit beispielsweise um ein FPGA (Field Programable Gate Array), und/oder eine CPU, und/oder einen Mikrocontroller, und/oder eine anwendungsspezifische integrierte Schaltung (ASIC) handeln kann. Die Speichereinrichtung kann beispielsweise ein nicht flüchtiger Speicher sein. Vorzugsweise weist die Steuer- und Datenübertragungsanlage nur ein einziges Steuerungsgerät auf.

Weiterhin sei angemerkt, dass die auswählbaren elektrischen Kontakte des wenigstens einen ersten Verbinders vorzugsweise in Abhängigkeit des vom Steuerungsgerät ausgeführten Kommunikationsprotokolls auswählbar bzw. aktivierbar sind.

Weiterhin umfasst die Steuer- und Datenübertragungsanlage ein erstes, mit dem Steuerungsgerät verbindbares Adaptermodul, welches folgende Merkmale aufweist: Einen zweiten Verbinder mit mehreren elektrischen Kontakten, wobei der zweite Verbinder zum elektrischen und mechanischen Zusammenfügen mit dem wenigsten einen ersten Verbinder ausgebildet ist,
eine Identifizierungseinrichtung, die eine Identifizierung des ersten und des zweiten Kommunikationsprotokolls durch das Steuerungsgerät ermöglicht, wobei die Identifizierungseinrichtung wenigstens eine elektrische Leitung aufweist, die wenigstens zwei vorbestimmte elektrische Kontakte kurzschließt,
eine Kommunikationsschnittstelle zum Verbinden wenigstens eines ersten Geräts, welches zur Kommunikation gemäß dem ersten Kommunikationsprotokoll ausgebildet ist, mit dem ersten Adaptermodul über ein erstes Bussystem, welches das erste Kommunikationsprotokoll nutzt, sowie eine weitere Kommunikationsschnittstelle zum Verbinden wenigstens eines zweiten Geräts, welches zur Kommunikation gemäß dem zweiten Kommunikationsprotokoll ausgebildet ist, über ein zweites Bussystem mit dem ersten Adaptermodul.

Vorzugsweise kann das erste Adaptermodul ferner eine Einrichtung zur Signalpegelumsetzung gemäß dem ersten Kommunikationsprotokoll aufweisen.

Angemerkt sei, dass die Kommunikationsschnittstelle einen Steckverbinder aufweisen kann, an den das erste Bussystem und somit das erste Gerät anschaltbar ist. Das erste Gerät ist vorzugsweise ein elektronisches Gerät, insbesondere ein Feldbusgerät. Ein solches Feldbusgerät kann beispielsweise ein Sensor, Aktor, ein Buskoppler oder ein Busgateway sein.

Die Steuer- und Auswerteeinheit des Steuerungsgeräts ist dazu ausgebildet, mit Hilfe der Identifizierungseinrichtung die kurzgeschlossenen elektrischen Kontakte zu erfassen und in Abhängigkeit davon das zu verwendende erste und zweite Kommunikationsprotokoll zu erkennen, wenn das erste Adaptermodul an das Steuerungsgerät angeschlossen ist, und das erkannte erste und zweite Kommunikationsprotokoll aus der Speichereinrichtung zu laden und auszuführen, so dass eine Kommunikation zwischen dem wenigstens einen ersten, am ersten Adaptermodul angeschlossenen Gerät und dem Steuerungsgerät gemäß dem ersten Kommunikationsprotokoll und ferner eine Kommunikation zwischen dem wenigstens einen zweiten, am ersten Adaptermodul angeschlossenen Gerät und dem Steuerungsgerät gemäß dem zweiten Kommunikationsprotokoll erfolgen kann.

Angemerkt ist, dass in der Speichereinrichtung auch mehr als die drei Kommunikationsprotokolle speicherbar sind, wobei alle gespeicherten Kommunikationsprotokolle unterschiedlich sind.

Die Kommunikationsprotokolle entsprechen vorzugsweise jeweils einem Steuerprogramm, welches in der Speichereinrichtung speicherbar ist. Bei dem ersten Kommunikationsprotokoll kann es sich beispielsweise um das Interbus-Kommunikationsprotokoll handeln, während es sich bei dem zweiten Kommunikationsprotokoll beispielsweise um das AXIO-Busprotokoll handeln kann.

Weiterhin sei angemerkt, dass es sich bei dem wenigstens einen ersten Verbinder um einen vorbestimmten, beispielsweise standardisierten elektrischen Verbinder handeln kann, wie zum Beispiel den AXIO-Steckverbinder. Sind mehrere erste Verbinder im Steuerungsgerät implementiert, handelt es sich hierbei vorzugsweise immer um den gleichen vorbestimmten elektrischen Verbinder.

Gemäß einer vorteilhaften Weiterbildung kann in der Speichereinrichtung des Steuerungsgeräts ein viertes Kommunikationsprotokoll speicherbar sein, welches sich vom ersten, dem zweiten und dem dritten Kommunikationsprotokoll unterscheidet. Das vierte Kommunikationsprotokoll kann zum Beispiel das CAN-Busprotokoll sein. Ferner kann ein zweites, mit dem Steuerungsgerät verbindbares Adaptermodul vorgesehen sein, welches folgende Merkmale aufweist:
einen dritten Verbinder mit mehreren elektrischen Kontakten, welcher zum elektrischen und mechanischen Zusammenfügen mit einem weiteren ersten Verbinder des Steuerungsgeräts ausgebildet ist,
eine Identifizierungseinrichtung, die eine Identifizierung des vierten Kommunikationsprotokolls insbesondere durch das Steuerungsgerät ermöglicht,
eine Kommunikationsschnittstelle zum Verbinden wenigstens eines dritten Geräts, welches zur Kommunikation gemäß dem vierten Kommunikationsprotokoll ausgebildet ist, mit dem zweiten Adaptermodul über ein drittes Bussystem, und optional eine Einrichtung zur Signalumsetzung gemäß dem vierten Kommunikationsprotokoll aufweist.

Die Steuer- und Auswerteeinheit des Steuerungsgeräts ist ferner dazu ausgebildet, mit Hilfe der Identifizierungseinrichtung des zweiten Adaptermoduls das zu verwendende vierte Kommunikationsprotokoll zu erkennen, wenn das zweite Adaptermodul an das Steuerungsgerät angeschlossen ist, und das erkannte vierte Kommunikationsprotokoll aus der Speichereinrichtung zu laden und auszuführen, so dass eine Kommunikation zwischen dem wenigstens einen dritten, am zweiten Adaptermodul angeschlossenen Gerät und dem Steuerungsgerät gemäß dem vierten Kommunikationsprotokoll erfolgen kann.

Angemerkt sei an dieser Stelle, dass die Adaptermodule und das Steuerungsgerät als getrennte Komponenten ausgebildet sind.

Gemäß einer vorteilhaften Ausgestaltung ist die Steuer- und Auswerteeinheit des Steuerungsgeräts dazu ausgebildet, unter Ansprechen auf das erkannte erste Kommunikationsprotokoll eine erste Gruppe elektrischer Kontakte aus den elektrischen Kontakten des ersten Verbinders und unter Ansprechen auf das erkannte zweite Kommunikationsprotokoll eine zweite Gruppe elektrischer Kontakte aus den elektrischen Kontakten des ersten Verbinders auszuwählen, wobei die erste und zweite Gruppe jeweils unterschiedliche elektrische Kontakte enthalten, und/oder unter Ansprechen auf das erkannte vierte Kommunikationsprotokoll die entsprechenden elektrischen Kontakte des weiteren ersten Verbinders auszuwählen, d.h. für eine Datenkommunikation zur Verfügung zu stellen.

Gemäß einer vorteilhaften Ausgestaltung weist die Identifizierungseinrichtung des ersten Adaptermoduls eine Speichereinrichtung auf, in der eine Kennzeichnung des ersten Kommunikationsprotokolls und eine Kennzeichnung des zweiten Kommunikationsprotokolls abgelegt sind. Die Steuer- und Auswerteeinrichtung ist in diesem Fall zum Auslesen der Speichereinrichtung der Identifizierungseinrichtung ausgebildet, wenn das erste Adaptermodul am Steuerungsgerät angeschlossen ist. Zusätzlich oder alternativ kann die Identifizierungseinrichtung des zweiten Adaptermoduls eine Speichereinrichtung aufweisen, in der eine Kennzeichnung des vierten Kommunikationsprotokolls abgelegt ist. In diesem Fall ist die Steuer- und Auswerteeinrichtung zum Auslesen der Speichereinrichtung der Identifizierungseinrichtung des zweiten Adaptermoduls ausgebildet, wenn das zweite Adaptermodul am Steuerungsgerät angeschlossen ist.

Die Kennzeichnung des ersten Kommunikationsprotokolls und die Kennzeichnung des vierten Kommunikationsprotokolls können beispielsweise jeweils durch das Typenschild des an das jeweilige Adaptermodul anschließbaren Geräts dargestellt werden.

Alternativ oder zusätzlich kann gemäß einer vorteilhaften Ausgestaltung die Identifizierungseinrichtung des ersten Adaptermoduls eine elektronische Schaltung, insbesondere einen Mikrocontroller, FPGA- oder ASIC-Baustein aufweisen, in der eine Kennzeichnung des ersten Kommunikationsprotokolls und eine Kennzeichnung des zweiten Kommunikationsprotokolls abgelegt sind. In diesem Fall ist die Steuer- und Auswerteeinrichtung dazu ausgebildet, die elektronische Schaltung des ersten Adaptermoduls aufzufordern, die Kennzeichnung des ersten Kommunikationsprotokolls und die Kennzeichnung des zweiten Kommunikationsprotokolls zum Steuerungsgerät zu übertragen, wenn das erste Adaptermodul am Steuerungsgerät angeschlossen ist, oder die elektronische Schaltung des ersten Adaptermoduls ist dazu ausgebildet, die Übertragung der Kennzeichnung des ersten Kommunikationsprotokolls und der Kennzeichnung des zweiten Kommunikationsprotokolls zum Steuerungsgerät zu veranlassen, wenn das erste Adaptermodul am Steuerungsgerät angeschlossen ist.

Alternativ oder zusätzlich kann auch die Identifizierungseinrichtung des zweiten Adaptermoduls eine elektronische Schaltung, insbesondere einen Mikrocontroller, FPGAS oder ASIC-Baustein aufweisen, in der eine Kennzeichnung des vierten Kommunikationsprotokolls abgelegt ist. In diesem Fall ist die Steuer- und Auswerteeinrichtung ferner dazu ausgebildet, die elektronische Schaltung des zweiten Adaptermoduls aufzufordern, die Kennzeichnung des vierten Kommunikationsprotokolls zum Steuerungsgerät zu übertragen, wenn das zweite Adaptermodul am Steuerungsgerät angeschlossen ist oder die elektronische Schaltung des zweiten Adaptermoduls ist dazu ausgebildet, die Übertragung der Kennzeichnung des vierten Kommunikationsprotokolls zum Steuerungsgerät zu veranlassen wenn das zweite Adaptermodul am Steuerungsgerät angeschlossen ist.

Vorzugsweise sind die zuvor erwähnten Speichereinrichtungen Bestandteil der jeweiligen elektronischen Schaltung.

Alternativ kann die Identifizierungseinrichtung des zweiten Adaptermoduls als eine passive Einrichtung implementiert sein, mit der beispielsweise bestimmte elektrische Kontakte des dritten Verbinders gebrückt bzw. kurzgeschlossen werden.

Es versteht sich, dass das Steuerungsgerät genau einen ersten Verbinder oder auch mehr als zwei erste Verbinder aufweisen kann, so dass auch mehr als zwei Adaptermodule, die jeweils ein unterschiedliches Kommunikationsprotokoll unterstützen, wenn gewünscht, auch gleichzeitig an das Steuerungsgerät angeschlossen werden können.

Um mehrere verschiedene Kommunikationsprotokolle ausführen bzw. mehrere verschiedene Bussysteme vorzugsweise gleichzeitig an das Steuerungsgerät anbinden zu können, weist das erste Adaptermodul die weitere Kommunikationsschnittstelle zum Verbinden wenigstens eines zweiten Geräts auf, welches zur Kommunikation gemäß dem zweiten Kommunikationsprotokoll ausgebildet ist, über ein zweites Bussystem mit dem ersten Adaptermodul, und kann optional eine weitere Einrichtung zur Signalpegelumsetzung gemäß dem zweiten Kommunikationsprotokoll aufweisen. Die Identifizierungseinrichtung des ersten Adaptermoduls ermöglicht somit zusätzlich eine Identifizierung des zweiten Kommunikationsprotokolls insbesondere durch das Steuerungsgerät.

Somit ist die Steuer- und Auswerteeinrichtung dazu ausgebildet, mit Hilfe der Identifizierungseinrichtung auch das zu verwendende zweite Kommunikationsprotokoll zu erkennen, wenn das erste Adaptermodul an das Steuerungsgerät angeschlossen ist, und das erkannte zweite Kommunikationsprotokoll aus der Speichereinrichtung zu laden und auszuführen, so dass ferner eine Kommunikation zwischen dem wenigstens einen zweiten, am ersten Adaptermodul angeschlossenen, Gerät und dem Steuerungsgerät gemäß dem zweiten Kommunikationsprotokoll erfolgen kann.

Dies ist insbesondere dann zweckmäßig, wenn das Steuerungsgerät nur einen einzigen ersten Verbinder aufweist.

Angemerkt sei, dass das Steuerungsgerät vorteilhafterweise derart ausgebildet ist, dass die Kommunikation gemäß dem ersten Kommunikationsprotokoll und die Kommunikation gemäß dem zweiten Kommunikationsprotokoll gleichzeitig stattfinden können.

Gemäß einer vorteilhaften Weiterbildung kann die Steuer- und Auswerteeinrichtung dazu ausgebildet sein, zu erkennen, ob an dem wenigstens einen ersten Verbinder unmittelbar ein Bussystem, welches das dritte Kommunikationsprotokoll anwendet, angeschlossen ist, wobei die Steuer- und Auswerteeinrichtung dann das dritte Kommunikationsprotokoll ausführt, wenn erkannt worden ist, dass das Bussystem, welches das dritte Kommunikationsprotokoll anwendet, an dem wenigstens einen ersten Verbinder angeschlossen ist.

Gemäß einer vorteilhaften Ausgestaltung kann die Steuer- und Datenübertragungsanlage ein drittes, mit dem Steuerungsgerät verbindbares Adaptermodul umfassen, welches
einen Verbinder mit mehreren elektrischen Kontakten, welcher zum elektrischen und mechanischen Zusammenfügen mit dem wenigstens einen ersten Verbinder ausgebildet ist,
eine Identifizierungseinrichtung, die eine Identifizierung eines fünften Kommunikationsprotokolls ermöglicht, welches im dritten Adaptermodul speicherbar ist, und
eine Kommunikationsschnittstelle zum Verbinden wenigstens eines Geräts, welches zur Kommunikation gemäß dem fünften Kommunikationsprotokoll ausgebildet ist, über ein fünftes Bussystem mit dem dritten Adaptermodul, aufweist,
wobei die Steuer- und Auswerteeinrichtung dazu ausgebildet ist, mit Hilfe der Identifizierungseinrichtung das zu verwendende fünfte Kommunikationsprotokoll zu erkennen, wenn das dritte Adaptermodul an das Steuerungsgerät angeschlossen ist, und das erkannte fünfte Kommunikationsprotokoll, welches im dritten Adaptermodul gespeichert ist, auszuführen, so dass eine Kommunikation zwischen dem wenigstens einen, am dritten Adaptermodul angeschlossenen Gerät und dem Steuerungsgerät gemäß dem fünften Kommunikationsprotokoll erfolgen kann.

Das dritte Adaptermodul kann zum Beispiel eine Einrichtung zur Signalpegelumsetzung gemäß dem fünften Kommunikationsprotokoll aufweisen.

Ein einfacher und kostengünstiger Ansatz sieht vor, dass
die Identifizierungseinrichtung des ersten Adaptermoduls wenigstens eine elektrische Leitung aufweist, die wenigstens zwei vorbestimmte elektrische Kontakte kurzschließt, und dass vorzugsweise auch die Identifizierungseinrichtung des zweiten Adaptermoduls wenigstens eine elektrische Leitung aufweist, die wenigstens zwei vorbestimmte elektrische Kontakte kurzschließt. Die Steuer- und Auswerteeinrichtung ist dann zweckmäßigerweise dazu ausgebildet, die kurzgeschlossenen elektrischen Kontakte zu erfassen und in Abhängigkeit davon das zu verwendende Kommunikationsprotokoll zu erkennen. Mit anderen Worten: Die Steuer- und Auswerteeinrichtung ist dazu ausgebildet zu erkennen, dass über das jeweilige Adaptermodul wenigstens ein Bussystem bzw. ein weiteres Gerät angeschlossen ist, welches ein vorbestimmtes Kommunikationsprotokoll, beispielsweise das erste oder zweite Kommunikationsprotokoll zur Datenkommunikation verwendet.

Die Erfindung wird nachfolgend anhand mehrerer Ausführungsbeispielen in Verbindung mit den beiliegenden Zeichnungen näher erläutert. Es zeigen:
- Figur 1: eine beispielhafte Steuer- und Datenübertragungsanlage gemäß der Erfindung mit einem einzigen Steuerungsgerät und einem anschaltbaren Adaptermodul,
- Figur 2: ein weiteres Adaptermodul, das an das in der Figur 1 oder Figur 3 gezeigte Steuerungsgerät anschaltbar ist,
- Figur 3: eine weitere beispielhafte Steuer- und Datenübertragungsanlage gemäß der Erfindung mit einem Steuerungsgerät und einem daran anschaltbaren Adaptermodul,
- Figur 4: ein weiteres beispielhaftes Adaptermodul gemäß der Erfindung, welches an das in der Figur 1 oder Figur 3 gezeigte Steuerungsgerät anschaltbar ist, und
- Figur 5: ein beispielhaftes Bussystem, das unmittelbar an das in der Figur 1 oder Figur 3 gezeigte Steuerungsgerät anschaltbar ist.

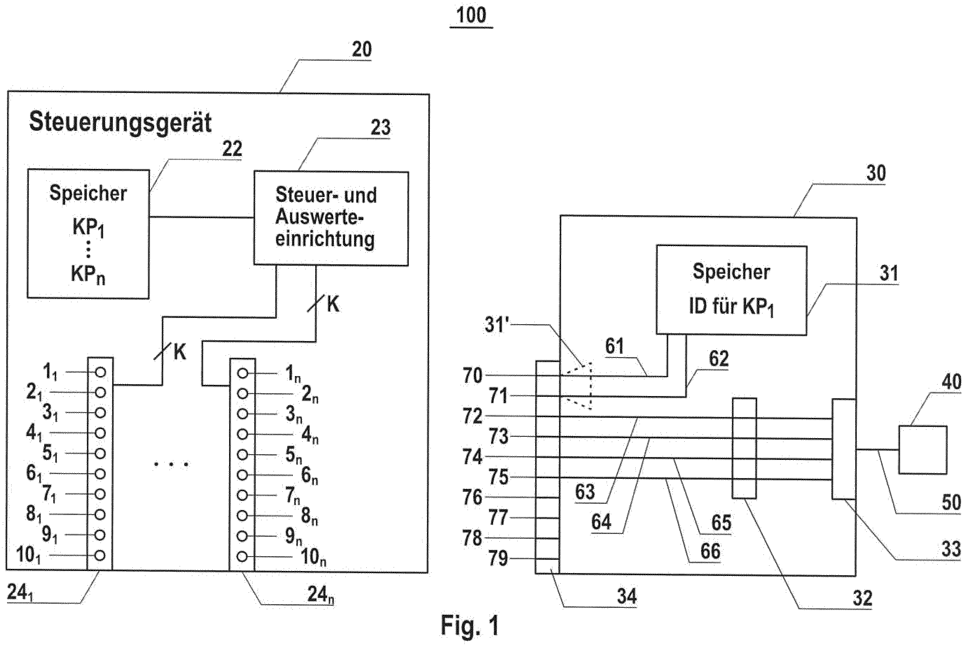

Figur 1 zeigt eine beispielhafte Steuer- und Datenübertragungsanlage 100, die beispielsweise in einer Automatisierungsumgebung, insbesondere in einer industriellen Automatisierungsanlage aufgebaut werden kann.

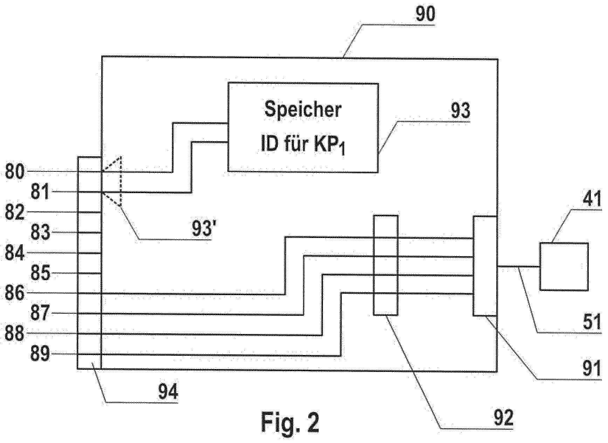

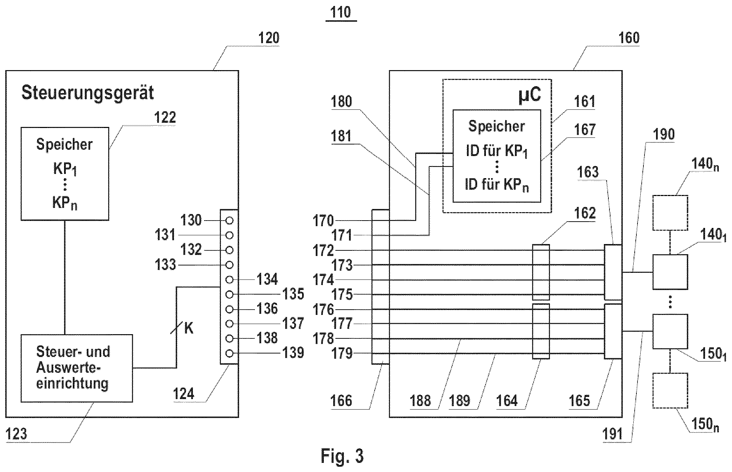

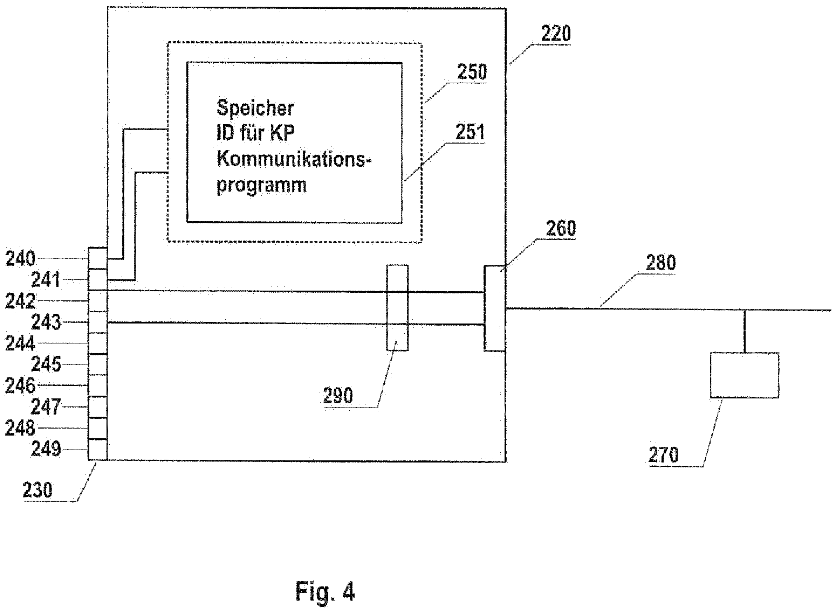

Die Steuer- und Datenübertragungsanlage 100 weist vorzugsweise ein einziges Steuerungsgerät 20 auf, an welches ein Adaptermodul oder mehrere Adaptermodule, beispielsweise das Adaptermodul 30, und/oder das in Figur 2 gezeigte Adaptermodul 90 und/oder das in Fig. 3 gezeigte Adaptermodul 160 und/oder das in Figur 4 gezeigte Adaptermodul 220, vorzugsweise lösbar angeschlossen werden können. Ferner kann ein Bussystem 200 und ein Feldbusteilnehmer 210 auch unmittelbar, also ohne Adaptermodul an das Steuerungsgerät 20 angeschlossen werden.

Das Adaptermodul 30 dient dazu, eine Datenkommunikation zwischen dem Steuerungsgerät 20 und wenigstens einem Gerät 40 über ein erstes Bussystem 50 welches ein erstes Kommunikationsprotokoll KP1verwendet, zu ermöglichen. Bei dem Gerät 40 handelt es sich vorzugsweise um ein elektronisches Feldbusgerät, wie zum Beispiel einen Sensor, einen Aktor, einen Buskoppler oder Busgateway, welche zur Kommunikation das erste Kommunikationsprotokoll KP1anwenden.

Bereits an dieser Stelle sei angemerkt, dass weitere erste Geräte über den Bus 50 mit dem Adaptermodul 30 und somit mit dem Steuerungsgerät 20 verbunden werden können. Dem Gerät 40 und möglichen weiteren Geräten ist gemeinsam, dass sie das erste Kommunikationsprotokoll KP1 zur Kommunikation mit dem Steuerungsgerät 20 verwenden.

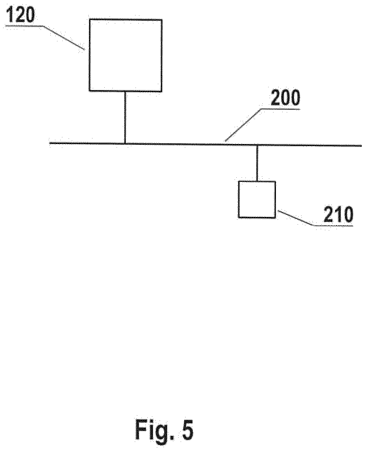

Das Steuerungsgerät 20 weist eine Speichereinrichtung 22 auf, in welcher wenigstens drei unterschiedliche Kommunikationsprotokolle KP1 bis KPn, d.h. wenigstens ein erstes, ein zweites und ein drittes Kommunikationsprotokoll, die verschieden sind, speicherbar sind. Weiterhin weist das Steuerungsgerät 20 eine Steuer- und Auswerteeinrichtung 23 auf, die beispielsweise als FPGA, und/ oder CPU und/ oder ASIC und/oder Mikrocontroller ausgebildet sein kann. Die Steuer- und Auswerteeinrichtung 23 ist dazu ausgebildet, die in der Speichereinrichtung 22 gespeicherten Kommunikationsprotokolle KP1 bis KPn auszuführen. Die Kommunikationsprotokolle sind vorzugsweise jeweils in Form eines digitalen Steuerprogramms in der Speichereinrichtung 22 abgelegt und werden beispielsweise mittels entsprechender Protokolltreiber, die in der Steuer- und Auswerteeinrichtung 23 implementiert sein können, ausgeführt. Bereits an dieser Stelle sei erwähnt, dass das dritte Kommunikationsprotokoll vom Steuerungsgerät 20 nur ausgeführt wird, wenn ein Bussystem 200, welches beispielhaft in Fig. 5 gezeigt ist, unmittelbar, d.h. ohne Verwendung eines Adaptermoduls am Steuerungsgerät 20 angeschlossen ist. Obwohl am Bussystem 200 nur ein Gerät 210 angeschlossen ist, versteht es sich von selbst, dass am Bussystem 200 auch mehrere Geräte, insbesondere Feldbusteilnehmer angeschlossen sein können, die allesamt zur Kommunikation das dritte Kommunikationsprotokoll verwenden.

Das Steuerungsgerät 20 weist ferner wenigstens einen ersten Verbinder mit mehreren auswählbaren elektrischen Kontakten auf. Beim vorliegenden Beispiel können mehrere erste Verbinder implementiert sein, wobei der einfacheren Darstellung wegen in Fig. 1 nur zwei erste Verbinder 24₁ und 24ₙ dargestellt sind. Angemerkt sei an dieser Stelle, dass es sich bei den ersten Verbindern 24₁ bis 24ₙ vorzugsweise um bau- und funktionsgleiche Verbinder handeln kann, die beispielsweise als AXIO-Steckverbinder ausgebildet sind.

Im gezeigten Beispiel sind die beiden ersten Verbinder 24₁ und 24ₙ als Buchsenverbinder ausgebildet, die jeweils k elektrische Kontakte 1₁ bis 10₁ beziehungsweise 1ₙ bis 10ₙ aufweisen, wobei k beispielsweise 10 ist. Selbstverständlich können die Verbinder auch als Steckverbinder ausgebildet sein. In der Figur 1 ist schematisch dargestellt, dass alle elektrischen Kontakte des ersten Verbinders 24₁ und des ersten Verbinders 24ₙ mit der Steuer- und Auswerteeinrichtung 23 verbunden sind. Ebenfalls besteht eine elektrische Verbindung zwischen dem Speicher 22 und der Steuer- und Auswerteeinrichtung 23.

Das mit dem Steuerungsgerät 20 verbindbare Adaptermodul 30 weist einen zweiten Verbinder 34 mit mehreren elektrischen Kontakten 70 bis 79 auf, wobei der zweite Verbinder 34 zum elektrischen und mechanischen Zusammenfügen mit dem ersten Verbinder 24₁ oder dem anderen ersten Verbinder 24ₙ ausgebildet ist. Der zweite Verbinder 34 ist komplementär zu den ersten Verbindern ausgebildet und weist demzufolge ebenfalls k, im vorliegenden Beispiel also zehn elektrische Kontakte 70 bis 79 auf, die im vorliegenden Beispiel als Stiftkontakte ausgebildet sind, um mit den elektrischen Buchsenkontakten des ersten Verbinders 24₁ oder des anderen ersten Verbinders 24ₙ gepaart werden zu können.

Im Adaptermodul 30 ist eine Identifizierungseinrichtung 31 implementiert, die eine Identifizierung des ersten Kommunikationsprotokolls KP1 insbesondere durch das Steuerungsgerät 20 ermöglicht. Im vorliegenden Beispiel weist die Identifizierungseinrichtung 31 eine Speichereinrichtung auf, in der eine Kennzeichnung des ersten Kommunikationsprotokolls KP1 abgelegt ist. Die Speichereinrichtung 31 ist beispielsweise elektrisch mit den Stiftkontakten 70 und 71 des zweiten Verbinders 34 verdrahtet. Das Adaptermodul 30 weist ferner eine Kommunikationsschnittstelle 33 zur Kommunikation mit dem wenigstens einen an das Adaptermodul 30 anschließbarem ersten Gerät 40 auf, welches zur Kommunikation gemäß dem ersten Kommunikationsprotokoll KP1 ausgebildet ist. Die Kommunikationsschnittstelle 33 weist einen elektrischen Verbinder auf, an den das Gerät 40 beispielsweise über den Bus 50 angeschlossen werden kann. Gemäß dem ersten Kommunikationsprotokoll KP1 weist die Kommunikationsschnittstelle 33 beispielsweise vier Ports auf, die mit den elektrischen Stiftkontakten 72, 73, 74 und 75 des zweiten Verbinders beispielsweise festverdrahtet sein können. Hierzu werden beispielsweise elektrische Leitungen 63, 64, 65 und 66 verwendet, wie dies in Figur 1 dargestellt ist. Ferner kann, je nach Implementierung, das Adaptermodul 30 eine Einrichtung 32 zur Signalpegelumsetzung gemäß dem ersten Kommunikationsprotokoll KP1 aufweisen. Beispielsweise werden in der Pegelumsetzungseinrichtung 32 die an der Kommunikationsschnittstelle 33 ankommenden Signale, welche einen definierten Spannungspegel aufweisen, auf einen Spannungswert von 3,3 Volt umgesetzt, um an das Steuerungsgerät 20 angepasst zu werden. In umgekehrter Richtung werden die vom Steuerungsgerät kommenden Signale von der Pegelumsetzungseinrichtung auf den für die Kommunikationsschnittstelle 33 definierten Signalpegel, der durch das erste Kommunikationsprotokoll festgelegt wird, umgesetzt.

Die Steuer- und Auswerteeinrichtung 23 ist dazu ausgebildet, mit Hilfe der Identifizierungseinrichtung 31 das zu verwendende erste Kommunikationsprotokoll KP1 zu erkennen, wenn das Adaptermodul 30 an das Steuerungsgerät 20 angeschlossen ist, und das erkannte erste Kommunikationsprotokoll KP1 aus der Speichereinrichtung 22 zu laden und auszuführen, so dass eine Kommunikation zwischen dem wenigstens einem ersten am Adaptermodul 30 angeschlossenen Gerät 40 und dem Steuerungsgerät 20 gemäß dem ersten Kommunikationsprotokoll KP1 erfolgen kann.

Der Vollständigkeit halber sei erwähnt, dass in Figur 1 das Steuerungsgerät 20 und das Adaptermodul 30 im getrennten Zustand dargestellt sind. Zur elektrischen und mechanischen Kopplung wird der zweite Verbinder 34 des Adaptermoduls 30 in einen der beiden ersten Verbinder 24₁ oder 24ₙ eingeführt.

Um eine Kommunikation zwischen dem Steuerungsgerät 20 und einem anderen Bussystem über ein viertes Kommunikationsprotokoll zu ermöglichen, kann das in Fig. 2 gezeigte Adaptermodul 90 verwendet werden.

Ähnlich dem Adaptermodul 30 weist das Adaptermodul 90 einen dritten Verbinder 94 mit mehreren elektrischen Kontakten 80 bis 89 auf, wobei der dritte elektrische Verbinder 94 zum elektrischen und mechanischen Zusammenfügen mit einem der ersten Verbinder 24₁ bis 24ₙ des Steuerungsgeräts 20 ausgebildet ist.

Ähnlich dem zweiten Verbinder 34 des Adaptermoduls 30 kann der dritte Verbinder 94 des Adaptermoduls 90 zehn Stiftkontakte 80 bis 89 aufweisen, die in die entsprechenden Buchsenkontakte des ersten Verbinders 24₁ oder 24ₙ eingeführt werden können. Das Adaptermodul 90 weist ebenfalls eine Identifizierungseinrichtung 93 auf, die eine Identifizierung eines vierten Kommunikationsprotokolls KPn insbesondere durch das Steuerungsgerät 20 ermöglicht. Wie in Figur 2 dargestellt, kann die Identifizierungseinrichtung 93 wiederum eine Speichereinrichtung enthalten, die mit den beiden Stiftkontakten 80 und 81 des dritten Verbinders 94 elektrisch verbunden ist. In der Speichereinrichtung der Identifizierungseinrichtung 93 ist eine Kennung des vierten Kommunikationsprotokolls KPn gespeichert. Weiterhin ist eine Kommunikationsschnittstelle 91 im Adaptermodul 90 implementiert, welche zur Kommunikation mit wenigstens einem dritten, über ein Bussystem 51 an das Adaptermodul 90 anschließbaren Geräts 41, welches zur Kommunikation gemäß dem vierten Kommunikationsprotokoll KPn ausgebildet ist, ausgebildet ist. Das Gerät 41 ist vorzugsweise ein elektronisches Feldbusgerät. Die Kommunikationsschnittstelle 91 kann wiederum einen elektrischen Verbinder umfassen, an den das dritte Gerät 41 über das Bussystem 51 angeschlossen sein kann. Der Bus 51 und das Gerät 41 verwenden das vierte Kommunikationsprotokoll KPn. Das Adaptermodul 90 kann, muss aber nicht, eine Einrichtung 92 zur Pegelumsetzung gemäß dem vierten Kommunikationsprotokoll KPn aufweisen. Beispielsweise werden in der Pegelumsetzungseinrichtung 92 die an der Kommunikationsschnittstelle 91 ankommenden Signale, welche einen definierten Spannungspegel aufweisen, auf einen Spannungswert von zum Beispiel 3,3 Volt umgesetzt, um an das Steuerungsgerät 20 angepasst zu werden. In umgekehrter Richtung werden die vom Steuerungsgerät kommenden Signal von der Pegelumsetzungseinrichtung 91 auf den für die Kommunikationsschnittstelle 33 definierten Signalpegel, der durch das vierte Kommunikationsprotokoll festgelegt wird, umgesetzt.

Gemäß dem vierten Kommunikationsprotokoll kann die Kommunikationsschnittstelle ebenfalls vier Anschlüsse beziehungsweise Ports aufweisen, die entsprechend dem dritten Kommunikationsprotokoll über Verbindungsdrähte oder Leiterbahnen mit den Stiftkontakten 86, 87, 88 und 89 des dritten Verbinders 94 elektrisch verbunden sind.

Die Steuer- und Auswerteeinrichtung 23 des Steuerungsgeräts 20 ist dazu ausgebildet, mit Hilfe der Identifizierungseinrichtung 93 des Adaptermoduls 90 das zu verwendende vierte Kommunikationsprotokoll KPn zu erkennen, wenn das Adaptermodul 90 an das Steuerungsgerät 20 angeschlossen ist, und das erkannte vierte Kommunikationsprotokoll aus der Speichereinrichtung 22 zu laden und auszuführen, so dass eine Kommunikation zwischen dem wenigstens einen dritten, am Adaptermodul 90 angeschlossenen Gerät 41 und dem Steuerungsgerät 20 gemäß dem vierten Kommunikationsprotokoll erfolgen kann. Angemerkt sei, dass eine Datenkommunikation zwischen dem Steuerungsgerät 20 und den Geräten 40 und 41 gleichzeitig stattfinden kann.

Nachfolgend wird die Funktionsweise der in Figur 1 gezeigten beispielhaften Steuer-und Datenübertragungsanlage 100 zur Unterstützung verschiedener Kommunikationsprotokolle näher erläutert.

Angenommen sei, dass das Adaptermodul 30 über den zweiten Verbinder 34 und den ersten Verbinder 24₁ elektrisch und mechanisch mit dem Steuerungsgerät 20 verbunden ist. Die Steuer- und Auswerteeinrichtung 23 ist dazu ausgebildet bzw. programmiert, über vorbestimmte Kontakte, hier die beiden Buchsenkontakte 1₁ und 2₁ des ersten Verbinders 24₁ und somit über die Stiftkontakte 70 und 71 des zweiten Verbinders 34 die in der der Speichereinrichtung der Identifizierungseinrichtung 31 des Adaptermoduls 30 gespeicherte Kennzeichnung des ersten Kommunikationsprotokolls KP1 auszulesen. Unter Ansprechen auf die ausgelesene Kennzeichnung des ersten Kommunikationsprotokolls KP1 erkennt die Steuer- und Auswerteinrichtung 23 das erste Kommunikationsprotokoll KP1 und lädt das in der Speichereinrichtung 22 gespeicherte erste Kommunikationsprotokoll zur Ausführung in die Steuer- und Auswerteeinrichtung 23. Ferner ist die Steuer- und Auswerteeinrichtung 23 dazu ausgebildet, unter Ansprechen auf das erkannte erste Kommunikationsprotokoll KP1 die entsprechenden elektrischen Kontakte des ersten Verbinders 24₁ auszuwählen. Im vorliegenden Beispiel bedeutet das, dass die Steuer- und Auswerteeinrichtung 23 die elektrischen Kontakte 3₁, 4₁, 5₁ und 6₁ des ersten Verbinders 24₁ auswählt, um eine Kommunikation zwischen dem Steuerungsgerät 20 und dem Gerät 40 über die Stiftkontakte 72 bis 75 des zweiten Verbinders und die Kommunikationsschnittstelle 33 des Adaptermoduls 30 unter Anwendung des ersten Kommunikationsprotokolls aufzubauen und zu steuern.

Ferner sei angenommen, dass zudem das Adaptermodul 90 über den dritten Verbinder 94 und den ersten Verbinder 24n elektrisch und mechanisch mit dem Steuerungsgerät 20 verbunden ist. Die Steuer- und Auswerteeinrichtung 23 ist dazu ausgebildet bzw. programmiert, über vorbestimmte Kontakte, hier die beiden Buchsenkontakte 1ₙ und 2ₙ des ersten Verbinders 24ₙ und somit über die Stiftkontakte 80 und 81 des dritten Verbinders 94 die in der der Speichereinrichtung der Identifizierungseinrichtung 93 des Adaptermoduls 90 gespeicherte Kennzeichnung des vierten Kommunikationsprotokolls KPn auszulesen. Unter Ansprechen auf die ausgelesene Kennzeichnung des vierten Kommunikationsprotokolls erkennt die Steuer- und Auswerteinrichtung 23 das vierte Kommunikationsprotokoll KPn und lädt das in der Speichereinrichtung 22 gespeicherte vierte Kommunikationsprotokoll zur Ausführung in die Steuer- und Auswerteeinrichtung 23. Ferner ist die Steuer- und Auswerteeinrichtung 23 dazu ausgebildet, unter Ansprechen auf das erkannte vierte Kommunikationsprotokoll KPn die entsprechenden elektrischen Kontakte des ersten Verbinders 24ₙ auszuwählen. Im vorliegenden Beispiel bedeutet das, dass die Steuer- und Auswerteeinrichtung 23 die elektrischen Kontakte 7ₙ, 8ₙ, 9ₙ und 10ₙ des ersten Verbinders 24ₙ auswählt, um eine Kommunikation zwischen dem Steuerungsgerät 20 und dem Gerät 41 über die Stiftkontakte 86 bis 89 des dritten Verbinders 94 und die Kommunikationsschnittstelle 91 des Adaptermoduls 90 unter Anwendung des vierten Kommunikationsprotokolls aufzubauen und zu steuern.

Wie bereits erwähnt, können an das Steuerungsgerät 20 mehr als zwei verschiedene Bussysteme über entsprechende Adaptermodule angeschlossen werden. Angemerkt sei noch an dieser Stelle, dass die Kommunikationen gemäß dem ersten und vierten Kommunikationsprotokoll zwischen dem Steuerungsgerät 20 und den beiden Geräten 40 und 41 gemäß einem Master- und Slave Betrieb ablaufen können, wobei das Steuerungsgerät 20 jeweils als Master und die beiden Geräte 40 und 41 als Slave fungieren.

Weiterhin sei angemerkt, dass an wenigstens einen der ersten Verbinder 24₁ bis 24ₙ das Bussystem 200 beziehungsweise das Gerät 210, welche in Fig. 5 dargestellt sind, direkt, das heißt ohne Adaptermodul angeschlossen werden kann. Das Bussystem 200 wendet das dritte Kommunikationsprotokoll an. In diesem Fall erkennt die Steuer- und Auswerteeinrichtung 23 des Steuerungsgeräts 20, dass das Bussystem 200 direkt angeschlossen ist, wobei die Steuer- und Auswerteeinrichtung 23 dann eine Kommunikation zwischen dem Steuerungsgerät 20 und dem Bussystem 200 über das dem Bussystem 200 zugeordnete dritte Kommunikationsprotokoll ausführt. Das Bussystem 200 kann beispielsweise das AXIO-Bussystem sein, wobei dann das dazugehörende AXIO-Kommunikationsprotokoll zur Anwendung gelangt, welches als drittes Kommunikationsprotokoll in dem Steuerungsgerät 20 abgelegt ist.

Es sei darauf hingewiesen, dass die Identifizierungseinrichtung eines Adaptermoduls, beispielsweise des Adaptermoduls 30, 90 oder 160 alternativ in Form einer elektrischen Leitung ausgebildet sein kann, mit der vorbestimmte elektrische Kontakte kurzgeschlossen werden können. Dies kann als Pincodierung bezeichnet werden. Das heißt, dass anstelle einer speicherbasierten Lösung beispielsweise wenigstens zwei elektrische Kontakte, wie zum Beispiel die als Stiftkontakte ausgebildeten elektrischen Kontakte 80 und 81 des Verbinders 94 des in Fig. 2 gezeigten Adaptermoduls 90, mittels einer elektrischen Verbindung bzw. Leitung 93' kurzgeschlossen werden können. Die elektrische Leitung 93' ist in Fig. 2 gestrichelt dargestellt. Die gleiche alternative Lösung ist in Fig. 1 dargestellt, bei der die als Stiftkontakte ausgebildeten elektrischen Kontakte 70 und 71 mittels einer elektrischen Leitung 31' kurzgeschlossen sind. Die Steuer- und Auswerteeinrichtung 23 ist dann dazu ausgebildet, die kurzgeschlossenen Stiftkontakte 80 und 81 zu erfassen, d.h. die dazu gehörende Pincodierung zu erkennen und in Abhängigkeit davon das zu verwendende Kommunikationsprotokoll zu erkennen. Mit anderen Worten: Die Steuer- und Auswerteeinrichtung 23 ist in der Lage, aus dem erfassten Kurzschluss zu schließen, dass über das Adaptermodul 90 ein Bussystem bzw. das Gerät 41 angeschlossen ist, welches ein vorbestimmtes Kommunikationsprotokoll, beispielsweise das erste Kommunikationsprotokoll KP1 zur Datenkommunikation verwendet. In ähnlicher Weise ist die Steuer- und Auswerteeinrichtung 23 dazu ausgebildet, die kurzgeschlossenen Stiftkontakte 70 und 71 zu erfassen, d.h. die dazu gehörende Pincodierung zu erkennen und in Abhängigkeit davon das zu verwendende Kommunikationsprotokoll zu erkennen. Mit anderen Worten: Die Steuer- und Auswerteeinrichtung 23 ist in der Lage, aus dem erfassten Kurzschluss zu schließen, dass über das Adaptermodul 30 ein Bussystem bzw. das Gerät 40 angeschlossen ist, welches ein vorbestimmtes Kommunikationsprotokoll, beispielsweise das erste Kommunikationsprotokoll KP1 zur Datenkommunikation verwendet.

Für den Fall, dass ein Adaptermodul, beispielsweise das Adaptermodul 30 oder 90 wenigstens eine weitere Kommunikationsschnittstelle (nur in Fig. 3 ist eine weitere Kommunikationsschnittstelle dargestellt) aufweist, an die ein Bussystem oder ein Gerät angeschlossen werden kann, welches ein drittes Kommunikationsprotokoll zur Kommunikation verwendet, kann die Identifizierungseinrichtung eine weitere elektrische Leitung (nicht dargestellt) aufweisen. Gemäß dieser Lösung können zum Beispiel wenigstens zwei weitere elektrische Kontakte, beispielsweise die als Stiftkontakte ausgebildete elektrischen Kontakte 83 und 84 des Verbinders 94 des Adaptermoduls 90 mittels der weiteren elektrischen Leitung kurzgeschlossen werden. Die Steuer- und Auswerteeinrichtung 23 ist dann dazu ausgebildet, auch den Kurzschluss der Stiftkontakte 83 und 84 zu erfassen und in Abhängigkeit davon das dritte zu verwendende Kommunikationsprotokoll zu erkennen. Mit anderen Worten: Die Steuer- und Auswerteeinrichtung 23 ist in der Lage, aus dem erfassten Kurzschluss zu schließen, dass über das Adaptermodul 90 ein weiteres Bussystem bzw. ein weiteres Gerät angeschlossen ist, welches beispielsweise das dritte Kommunikationsprotokoll KP3 zur Datenkommunikation verwendet.

Der Vorteil der in Figur 1 gezeigten Steuer- und Datenübertragungsanlage 100 besteht darin, dass das Steuerungsgerät 20 einfach und schnell mit verschiedenen Bussystemen, vorzugsweise sogar gleichzeitig mit verschiedenen Bussystemen über verschiedene Kommunikationsprotokolle kommunizieren kann.

In Figur 3 ist eine weitere beispielhafte Steuer- und Datenübertragungsanlage 110 zur Unterstützung verschiedener Kommunikationsprotokolle dargestellt. Auch diese Anlage 110 kann wiederum in einer Automatisierungsumgebung installiert werden.

Die Steuer- und Datenübertragungsanlage 110 weist vorzugsweise ein einziges Steuerungsgerät 120 auf, in welchem vorzugsweise nur ein einziger erster Verbinder 124 implementiert ist. Ferner ist eine Speichereinrichtung 122 im Steuerungsgerät 120 implementiert, in der mehrere verschiedene Kommunikationsprotokolle KP1 bis KPₙ abgelegt werden können. Vorzugsweise sind mindestens drei, im vorliegenden Beispiel drei verschiedene Kommunikationsprotokolle in der Speichereinrichtung 122 abgelegt, nämlich ein erstes, ein zweites und ein drittes Kommunikationsprotokoll, wobei das erste und zweite Kommunikationsprotokoll bei Verwendung eines Adaptermoduls ausgeführt werden, während das dritte Kommunikationsprotokoll ausgeführt wird, wenn das in Fig. 5 gezeigte Bussystem 200 unmittelbar am Steuerungsgerät 120 angeschlossen ist.

Weiterhin weist das Steuerungsgerät 120 eine Steuer- und Auswerteeinrichtung 123 auf, die mit der Speichereinrichtung 122 und dem Verbinder 124 verbunden ist. Die Steuer-und Auswerteeinrichtung 123 ist beispielsweise als FPGA (Field Programable Gate Array), und/oder CPU, und/oder Mikrocontroller, und/oder als eine anwendungsspezifische integrierte Schaltung (ASIC) ausgebildet. Der erste Verbinder 124 des Steuerungsgeräts 120 weist beispielsweise zehn elektrische Kontakte 130 bis 139 auf, die beispielsweise als Buchsenkontakte ausgebildet sein können. Die Steuer-und Auswerteeinrichtung 123 ist zum Ausführen der in der Speichereinrichtung 122 gespeicherten Kommunikationsprotokolle ausgebildet. An das Steuerungsgerät 120 können zum Beispiel das Adaptermodul 30, das Adaptermodul 90, das in Fig. 3 gezeigte Adaptermodul 160 oder das in Fig. 4 gezeigte Adaptermodul 220 angeschlossen werden. Angemerkt sei, dass die Steuer- und Auswerteeinrichtung 123 als FPGA und/oder CPU und /oder beispielsweise als ASIC ausgebildet sein kann.

Das Adaptermodul 160 weist einen Verbinder 166 auf, der komplementär zum Verbinder 124 des Steuerungsgeräts 120 ausgebildet sein kann. Bei dem erläuterten Ausführungsbeispiel weist der Verbinder 166 des Adaptermoduls 160 zehn Stiftkontakte 170 bis 179 auf, die in die jeweiligen Buchsenkontakte 130 bis 139 des Verbinders 124 eingefügt werden können. Das Adaptermodul 160 weist ferner eine Identifizierungseinrichtung 161 auf, die eine Identifizierung wenigstens des ersten und des zweiten Kommunikationsprotokolls gegenüber dem Steuerungsgerät 120 ermöglicht. Die Identifizierungseinrichtung 161 kann, ähnlich den Identifizierungseinrichtungen 31 und 93 des Adaptermodul 30 bzw. 90 eine Speichereinrichtung 167 oder eine elektronische Schaltung, in der zum Beispiel die Speichereinrichtung 167 integriert ist, aufweisen. Die elektronische Schaltung ist im vorliegenden Beispiel als Mikrocontroller ausgebildet. Sie könnte aber auch als FPGA oder ASIC ausgebildet sein. Alternativ könnte der Mikrocontroller auf eine separate Speichereinrichtung zugreifen. In der Speichereinrichtung 167 können mehrere Kennzeichnungen gespeichert sein, die jeweils ein unterschiedliches Kommunikationsprotokoll identifizieren. Die Identifizierungseinrichtung 161 kann über beispielsweise zwei elektrische Leiter mit zwei vorbestimmten Stiftkontakten, hier den Stiftkontakten 170 und 171 des Adaptermoduls 160 verbunden sein.

Zudem weist das Adaptermodul 160 wenigstens eine Kommunikationsschnittstelle 163 auf, welche zur Kommunikation mit wenigstens einem an das Adaptermodul 160 anschließbaren ersten Geräts 140 ₁ dient, welches zur Kommunikation gemäß einem ersten Kommunikationsprotokoll KP1 ausgebildet ist. Ferner ist vorzugsweise wenigstens eine Einrichtung 162 zur Pegelumsetzung gemäß dem ersten Kommunikationsprotokoll vorgesehen, die der ersten Kommunikationsschnittstelle 163 zugeordnet ist. Die erste Kommunikationsschnittstelle 163 weist einen elektrischen Verbinder auf, an den das Gerät 140₁ über ein Bussystem 190 angeschlossen werden kann. Das Gerät 140₁ und das Bussystem 190 kommunizieren unter Verwendung des ersten Kommunikationsprotokoll KP1. Die erste Kommunikationsschnittstelle 163 weist beispielsweise vier Ports auf, die über elektrische Drähte oder Leiterbahnen mit vorbestimmten elektrischen Stiftkontakten, im vorliegenden Beispiel mit den elektrischen Stiftkontakten 172, 173, 174 und 175 des Verbinders 166 verbunden sind.

Damit das Steuerungsgerät 120, welches vorzugsweise lediglich den Verbinder 124 aufweist, dennoch mit mehreren verschiedenen Bussystemen, die jeweils ein anderes Kommunikationsprotokoll verwenden, beispielsweise auch gleichzeitig kommunizieren kann, weist das Adaptermodul 160 mindestens eine weitere Kommunikationsschnittstelle 165 auf, die einen elektrischen Verbinder aufweist, an den ein zweites Gerät 150₁ über ein zweites Bussystem 191 angeschlossen werden kann. Das zweite Gerät 150₁ und das zweite Bussystem 191 kommunizieren über ein zweites Kommunikationsprotokoll KPₙ. In der Speichereinrichtung 167 ist neben einer ersten Kennung, die das erste Kommunikationsprotokoll identifiziert, zumindest eine weitere Kennzeichnung abgelegt, welche das zweite Kommunikationsprotokoll identifiziert. In Figur 3 ist schematisch dargestellt, dass am ersten Bussystem 190 neben dem Gerät 140₁ weitere Geräte 140ₙ angeschlossen sein können, die allesamt das erste Kommunikationsprotokoll KP1 anwenden. In ähnlicher Weise können an das weitere Bussystem 191 neben dem Gerät 150 ₁ weitere Geräte 150ₙ angeschlossen sein, die allesamt das zweite Kommunikationsprotokoll KPₙ anwenden. Bei den Geräten 140 und 150 kann es sich wiederum um elektronische Geräte, wie zum Beispiel Sensoren, Buskoppler, Busgateways und/oder Aktoren handeln.

Die zweite Kommunikationsschnittstelle 165 kann ebenfalls vier Ports aufweisen, die über dargestellte elektrische Verbindungen mit den elektrischen Kontaktstiften 176, 177, 178 und 179 des Verbinders 166 fest verbunden beziehungsweise fest verdrahtet sind. Zudem weist das Adaptermodul 160 in diesem Fall eine weitere Einrichtung 164 zur Signalpegelumsetzung gemäß dem zweiten Kommunikationsprotokoll KPₙ auf. Die Pegelumsetzungseinrichtungen 162 und 164 haben die gleiche Aufgabe wie die Pegelumsetzer 32 und 92. Angemerkt sei jedoch, dass die erste Kommunikationsschnittstelle 163 und die zweite Kommunikationsschnittstelle 165 eine unterschiedliche Anzahl an Ports enthalten können.

Mit anderen Worten: Wie in Figur 3 dargestellt, sind die Ports der Kommunikationsschnittstelle 163 mit einer ersten Gruppe von elektrischen Stiftkontakten 172 bis 175 des Verbinders 166 verbunden, während die Ports der Kommunikationsschnittstelle 165 mit einer zweiten Gruppe von elektrischen Stiftkontakten 176 bis 179 des Verbinders 166 verbunden sind, wobei die jeweiligen Gruppen von elektrischen Kontakten keinen gemeinsamen Kontakt enthalten. Weist der Verbinder 166 noch freie elektrische Kontakte auf, können auch mehr als zwei Kommunikationsschnittstellen im Adaptermodul 160 in entsprechender Weise mit den freien elektrischen Kontakten des Verbinders 166 verbunden werden, so dass jeweils eine Kommunikation zwischen dem Steuerungsgerät 120 und mehr als zwei verschiedenen Bussystemen möglich ist.

Angemerkt sei noch, dass der Mikrocontroller 161 dazu ausgebildet sein kann, zu erkennen, ob die Kommunikationsschnittstellen 163 und 165 beschaltet sind.

Nachfolgend wird die Funktionsweise der in Figur 3 gezeigten Steuer- und Datenübertragungsanlage 110 näher erläutert.

Angenommen sei, dass das Gerät 140₁ an der Kommunikationsschnittstelle 163 sowie das Gerät 150₁ an der Kommunikationsschnittstelle 165 angeschlossen sind und das Adaptermodul 160 elektrisch und mechanisch mit dem Steuerungsgerät 120 gekoppelt ist.

Die Steuer- und Auswerteeinrichtung 123 ist nunmehr in der Lage, die elektrische Kopplung zwischen Steuerungsgerät 120 und Adaptermodul 160 zu erkennen und ferner dazu ausgebildet, mit Hilfe der Identifizierungseinrichtung 161 die zu verwendenden Kommunikationsprotokolle zu erkennen.

Hierzu wird gemäß einer vorteilhaften Ausführungsform die Steuer- und Auswerteeinrichtung 123 über die Kontakte 130, 131, 170 und 171 von der als Mikrocontroller ausgebildeten Identifizierungseinrichtung 161 darüber informiert, dass die Kommunikationsschnittstellen 163 und 165 jeweils mit einem Bussystem 190 bzw. 191 beschaltet sind. Die Steuer- und Auswerteeinrichtung 123 fordert dann unter Ansprechen auf diese Information die Identifizierungseinrichtung 161 auf, die gespeicherten Kennzeichnungen der beiden Kommunikationsprotokolle KP1 und KPn, die den beiden Kommunikationsschnittstellen 163 und 165 zugeordnet sind, zu übertragen. Alternativ kann auch die als Mikrocontroller ausgebildete Identifizierungseinrichtung 161 selbst veranlassen, dass die beiden Kennzeichnungen der Kommunikationsprotokolle KP1 und KPn zum Steuerungsgerät 120 übertragen werden.

Unter Ansprechen auf die beiden empfangenen Kennzeichnungen identifiziert die Steuer- und Auswerteeinrichtung das erste Kommunikationsprotokoll KP1 und das zweite Kommunikationsprotokoll KPₙ. Die Steuer- und Auswerteeinrichtung 123 ist ferner dazu ausgebildet, unter Ansprechen auf das erkannte erste Kommunikationsprotokoll KP1 eine erste Gruppe elektrischer Kontakte 132, 133, 134 und 135 des Verbinders 124 und unter Ansprechen auf das erkannte zweite Kommunikationsprotokoll KPₙ eine zweite Gruppe elektrischer Kontakte 136, 137, 138 und 139 aus den elektrischen Kontakten des Verbinders 124 auszuwählen, wobei die erste und zweite Gruppe jeweils unterschiedliche elektrische Kontakte, das heißt keinen gemeinsamen Kontakt enthalten. Weiterhin ist die Steuer- und Auswerteeinrichtung 123 dazu ausgebildet, das erkannte erste Kommunikationsprotokoll KP1 und das erkannte zweite Kommunikationsprotokoll KPₙ aus der Speichereinrichtung 122 zu laden und auszuführen, so dass jeweils eine Kommunikation zwischen dem wenigstens einen am Adaptermodul 160 angeschlossenen ersten Gerät 140₁ gemäß dem ersten Kommunikationsprotokoll KP1 und vorzugsweise gleichzeitig eine weitere Kommunikation zwischen dem wenigstens einen am Adaptermodul 160 angeschlossenen zweiten Gerät 150₁ gemäß dem zweiten Kommunikationsprotokoll KPₙ erfolgen kann.

Wie bereits erwähnt, kann das Steuerungsgerät 120 auch über das Adaptermodul 30 mit dem Gerät 40 oder über das Adaptermodul 90 mit dem Gerät 41 verbunden werden. In diesem Fall wird ähnlich dem zuvor hinsichtlich des Adaptermoduls 160 beschriebenen Verfahren nur die eine in der Identifizierungseinrichtung 31 gespeicherte Kennzeichnung zur Steuer- und Auswerteeinrichtung 123 übertragen, wenn das Adaptermodul 30 mit dem Steuerungsgerät 120 verbunden wird. Unter Ansprechen auf die empfangene Kennzeichnung wird auch nur das erste Kommunikationsprotokoll KP1 in die Steuer-und Auswerteeinrichtung 123 geladen und von dieser ausgeführt. Demzufolge findet auch nur eine Kommunikation über das Adaptermodul 30 zwischen dem Steuerungsgerät 120 und dem Gerät 140 ₁ gemäß dem ersten Kommunikationsprotokoll KP1 statt.

Wird anstelle des Adaptermoduls 30 das Adaptermodul 90 an das Steuerungsgerät 120 angeschlossen, läuft das zuvor geschilderte Verfahren in ähnlicher Weise ab, so dass das Steuerungsgerät 120 nunmehr über das Adaptermodul 90 mit dem Gerät 41 unter Anwendung des vierten Kommunikationsprotokolls kommunizieren kann.

Wie beim Steuerungsgerät 20 ist in dem Steuerungsgerät 120 zusätzlich ein drittes Kommunikationsprotokoll hinterlegt, welches von der Steuer- und Auswerteeinrichtung 123 geladen und ausgeführt wird, wenn an dem elektrischen Verbinder 124 zum Beispiel das Bussystem 200, welches das dritte Kommunikationsprotokoll anwendet, unmittelbar, das heißt ohne Zwischenschaltung eines Adaptermoduls, angeschlossen wird.

In diesem Fall führt das Steuerungsgerät 120 automatisch eine Kommunikation mit dem Bussystem 200 und dem Gerät 210 gemäß dem vorbestimmten Kommunikationsprotokoll aus.

Mit anderen Worten: Sowohl das Steuerungsgerät 20 als auch das Steuerungsgerät 120 können in der Lage sein, insbesondere beim Hochfahren eines Betriebssystems zu prüfen, ob ein Bussystem über ein Adaptermodul angeschlossen ist oder ob ein Bussystem 200 unmittelbar, also ohne Zwischenschaltung eines Adaptermoduls, angeschlossen ist.

In Figur 4 ist ein weiteres beispielhaftes Adaptermodul 220 gezeigt, welches sich von den Adaptermodulen 30, 90 und 160 insbesondere dadurch unterscheidet, dass ein fünftes Kommunikationsprotokoll, welches sich vom ersten, zweiten und dritten Kommunikationsmodul unterscheidet, im Adaptermodul 220 gespeichert ist, um eine Kommunikation eines Bussystems 280 bzw. eines daran angeschlossenen Geräts 270, welche das fünfte Kommunikationsprotokoll anwenden, mit dem Steuerungsgerät 20 oder dem Steuerungsgerät 120 zu ermöglichen. An das Bussystem 280 können mehrere Geräte angeschlossen sein, die insbesondere als Feldbusteilnehmer ausgebildet sind. Auch das Adaptermodul 220 kann mit einem der Verbinder 24₁ bis 24ₙ des Steuerungsgeräts 20 oder dem Verbinder 124 des Steuerungsgeräts 120 elektrisch und mechanisch gekoppelt werden.

Hierzu weist das Adaptermodul 220 einen Verbinder 230 auf, der komplementär zum Verbinder 124 des Steuerungsgeräts 120 oder zu den Verbindern 24₁ bis 24ₙ des Steuerungsgeräts 20 ausgebildet sein kann. Bei dem erläuterten Ausführungsbeispiel weist der Verbinder 230 des Adaptermoduls 220 zehn Stiftkontakte 240 bis 249 auf, die in die jeweiligen Buchsenkontakte 130 bis 139 des Verbinders 124 oder in die jeweiligen Buchsenkontakte eines der Verbinder 24₁ bis 24ₙ des Steuerungsgeräts 20 eingeführt werden können. Das Adaptermodul 220 weist ferner eine Identifizierungseinrichtung 250 auf, die eine Identifizierung des fünften Kommunikationsprotokolls gegenüber dem Steuerungsgerät 120 ermöglicht. Die Identifizierungseinrichtung 250 kann, ähnlich den Identifizierungseinrichtungen 31, 93 und 161 der Adaptermodul 30, 90 bzw. 160 eine Speichereinrichtung 251 oder eine elektronische Schaltung, in der zum Beispiel die Speichereinrichtung 251 integriert ist, aufweisen. Die elektronische Schaltung ist vorzugsweise als Mikrocontroller ausgebildet. Sie kann aber auch als FPGA oder ASIC realisiert werden. Alternativ könnte der Mikrocontroller auf eine separate Speichereinrichtung zugreifen. In der Speichereinrichtung 251 ist neben der Kennung des fünften Kommunikationsprotokolls auch das fünfte Kommunikationsprotokoll selbst abgelegt. Das fünfte Kommunikationsprotokoll ist allerdings weder im Steuerungsgerät 20 noch im Steuerungsgerät 120 gespeichert. Die Identifizierungseinrichtung 250 kann über beispielsweise zwei elektrische Leiter mit zwei vorbestimmten Stiftkontakten, hier den Stiftkontakten 240 und 241 des Adaptermoduls 220 verbunden sein.

Zudem weist das Adaptermodul 220 wenigstens eine Kommunikationsschnittstelle 260 auf, welche zur Kommunikation mit dem Bussystem 280 und dem daran angeschlossenen Gerät 270 dient, welche zur Kommunikation gemäß dem fünften Kommunikationsprotokoll ausgebildet sind. Ferner ist vorzugsweise wenigstens eine Einrichtung 290 zur Pegelumsetzung gemäß dem fünften Kommunikationsprotokoll vorgesehen, die der Kommunikationsschnittstelle 260 zugeordnet ist. Die Kommunikationsschnittstelle 260 weist einen elektrischen Verbinder auf, an den das Gerät 270 über das Bussystem 280 angeschlossen werden kann. Die Kommunikationsschnittstelle 260 weist beispielsweise zwei Ports auf, die über elektrische Drähte oder Leiterbahnen mit vorbestimmten elektrischen Stiftkontakten, im vorliegenden Beispiel mit den elektrischen Stiftkontakten 242 und 243 des Verbinders 230 verbunden sind.

Angemerkt sei noch, dass der Mikrocontroller der Identifizierungseinrichtung 250 dazu ausgebildet sein kann, zu erkennen, ob die Kommunikationsschnittstelle 260 beschaltet ist.

Nunmehr sei angenommen, dass das Bussystem 280 mittels des Adaptermoduls 220 beispielsweise an dem Steuerungsgerät 20 angeschlossen worden ist.

In einem ersten Schritt kann unter Steuerung der Steuer- und Auswerteeinrichtung 23 des Steuerungsgeräts 20 oder unter Steuerung des Mikrocontrollers des Adaptermoduls 220 die in der Speichereinrichtung 251 hinterlegte Kennung zum Steuergerät 20 übertragen werden. Die Steuer- und Auswerteeinrichtung 23 ist dazu ausgebildet, mit Hilfe der Identifizierungseinrichtung 250, d.h. anhand der empfangenen Kennung, festzustellen, dass das dazugehörende fünfte Kommunikationsprotokoll nicht im Steuerungsgerät 20, sondern im Adaptermodul 220 gespeichert ist. Unter Ansprechen auf die ausgewertete Kennung ist die Steuer- und Auswerteeinrichtung 23 nunmehr in der Lage, das fünfte Kommunikationsprotokoll auszuführen, so dass eine Kommunikation zwischen dem wenigstens einen, am Adaptermodul 220 angeschlossenen Gerät 270 und dem Steuerungsgerät 20 gemäß dem fünften Kommunikationsprotokoll erfolgen kann. Hierzu kann das Steuerungsgerät 20 auf das im Adaptermodul 220 gespeicherte fünfte Kommunikationsprotokoll zugreifen, oder das Adaptermodul 220 ist dazu ausgebildet, dass fünfte Kommunikationsmodul beispielsweise über die Kontakte 240 und 241 des Verbinders 230 zum Steuerungsgerät 20 zu übertragen. Das fünfte Kommunikationsprotokoll kann dann temporär oder auch länger in der Speichereinrichtung 22 gespeichert werden. Länger bedeutet, dass das fünfte Kommunikationsprotokoll in der Speichereinrichtung 22 auch dann gespeichert bleibt, wenn das Adaptermodul 220 wieder vom Steuerungsgerät 20 getrennt worden ist.

Das Steuerungsgerät 120 kann ähnlich dem Steuerungsgerät 20 ausgebildet sein, um eine Kommunikation mit dem am Bussystem 280 angeschlossenen Gerät 270 über das fünfte im Adaptermodul 220 gespeicherte Kommunikationsprotokoll zu ermöglichen, wenn das Adaptermodul 220 am Verbinder 124 des Steuerungsgeräts angeschlossen wird.

Gemäß einer vorteilhaften Ausgestaltung können die beiden Steuerungsgeräte jeweils eine interne Energieversorgungsquelle, beispielsweise jeweils einen Akkumulator oder eine Batterie aufweisen. Denkbar ist ferner, dass die beiden Steuerungsgeräte jeweils einen Versorgungsanschluss zum Anschließen einer externen Energieversorgungsquelle aufweisen, über die zum Beispiel der Akkumulator, sofern vorhanden, aufgeladen werden kann. Die Speisung der Adaptermodule kann über die jeweiligen Steuerungsgeräte erfolgen. Hierzu können die Adaptermodule und Steuerungsgeräte entsprechende Schnittstellen aufweisen. Denkbar ist auch, dass die Adaptermodule jeweils eine interne Energieversorgungsquelle, beispielsweise jeweils einen Akkumulator oder eine Batterie aufweisen. Denkbar ist ferner, dass die Adaptermodule jeweils einen Versorgungsanschluss zum Anschließen einer externen Energieversorgungsquelle aufweisen, über die zum Beispiel der Akkumulator, sofern vorhanden, aufgeladen werden kann.

## Patentansprüche

1. Steuer- und Datenübertragungsanlage (100; 110) zur Unterstützung verschiedener Kommunikationsprotolle, aufweisend:
- ein Steuerungsgerät (20; 120) mit
einer Speichereinrichtung (22; 122), in welcher wenigstens ein erstes, ein zweites und ein drittes Kommunikationsprotokoll speicherbar sind, wobei das erste, das zweite und das dritte Kommunikationsprotokoll verschieden sind, einer Steuer- und Auswerteeinrichtung (23; 123), die zum Ausführen der in der Speichereinrichtung (22; 122) gespeicherten Kommunikationsprotokolle ausgebildet ist, und
wenigstens einem ersten Verbinder (24₁, 24ₙ; 124) mit mehreren auswählbaren elektrischen Kontakten (1₁-10₁, 1ₙ-10ₙ; 130-139) und
- ein erstes, mit dem Steuerungsgerät (20; 120) verbindbares Adaptermodul (160) mit
einem zweiten Verbinder (166) mit mehreren elektrischen Kontakten (170-179), welcher zum elektrischen und mechanischen Zusammenfügen mit dem wenigstens einen ersten Verbinder (24₁, 24ₙ; 124) ausgebildet ist,
einer Identifizierungseinrichtung (161), die eine Identifizierung des ersten und des zweiten Kommunikationsprotokolls durch das Steuerungsgerät (120) ermöglicht, wobei die Identifizierungseinrichtung (161) wenigstens eine elektrische Leitung aufweist, die wenigstens zwei vorbestimmte elektrische Kontakte (170, 171; 180, 181) kurzschließt,
einer Kommunikationsschnittstelle (163) zum Verbinden wenigstens eines ersten Geräts (140₁), welches zur Kommunikation gemäß dem ersten Kommunikationsprotokoll ausgebildet ist, über ein erstes Bussystem (190) mit dem ersten Adaptermodul (160) sowie einer weiteren Kommunikationsschnittstelle (165) zum Verbinden wenigstens eines zweiten Geräts (150₁), welches zur Kommunikation gemäß dem zweiten Kommunikationsprotokoll ausgebildet ist, über ein zweites Bussystem (191) mit dem ersten Adaptermodul (160),
wobei die Steuer- und Auswerteeinrichtung (23; 123) dazu ausgebildet ist, mit Hilfe der Identifizierungseinrichtung (161) die kurzgeschlossenen elektrischen Kontakte (180, 181) zu erfassen und in Abhängigkeit davon das zu verwendende erste und zweite Kommunikationsprotokoll zu erkennen, wenn das erste Adaptermodul (160) an das Steuerungsgerät (20; 120) angeschlossen ist, und das erkannte erste und zweite Kommunikationsprotokoll aus der Speichereinrichtung (22; 122) zu laden und auszuführen, so dass eine Kommunikation zwischen dem wenigstens einen ersten, am ersten Adaptermodul (160) angeschlossenen Gerät (140₁) und dem Steuerungsgerät (20; 120) gemäß dem ersten Kommunikationsprotokoll und ferner eine Kommunikation zwischen dem wenigstens einen zweiten, am ersten Adaptermodul (160) angeschlossenen Gerät (150₁) und dem Steuerungsgerät (20; 120) gemäß dem zweiten Kommunikationsprotokoll erfolgen kann.

2. Steuer- und Datenübertragungsanlage (100; 110) nach Anspruch 1,
**dadurch gekennzeichnet, dass**
die Steuer- und Auswerteeinrichtung (23; 123) dazu ausgebildet ist, unter Ansprechen auf das erkannte erste Kommunikationsprotokoll eine erste Gruppe elektrischer Kontakte (132-135) aus den elektrischen Kontakten des ersten Verbinders (124) und unter Ansprechen auf das erkannte zweite Kommunikationsprotokoll eine zweite Gruppe (136-139) elektrischer Kontakte aus den elektrischen Kontakten des ersten Verbinders (124) auszuwählen, wobei die erste und zweite Gruppe jeweils unterschiedliche elektrische Kontakte enthalten.

3. Steuer- und Datenübertragungsanlage (100; 110) nach Anspruch 1 oder 2, **dadurch gekennzeichnet, dass**
die Identifizierungseinrichtung (161) eine Speichereinrichtung (167) aufweist, in der eine Kennzeichnung des ersten Kommunikationsprotokolls und eine Kennzeichnung des zweiten Kommunikationsprotokolls abgelegt sind, und dass die Steuer- und Auswerteeinrichtung (23; 123) zum Auslesen der Speichereinrichtung (167) ausgebildet ist, wenn das erste Adaptermodul (160) am Steuerungsgerät (20; 120) angeschlossen ist.

4. Steuer- und Datenübertragungsanlage (100; 110) nach Anspruch 1, 2 oder 3, **dadurch gekennzeichnet, dass**
die Identifizierungseinrichtung (161) eine elektronische Schaltung, insbesondere einen Mikrocontroller, FPGA oder ASIC aufweist, in der eine Kennzeichnung des ersten Kommunikationsprotokolls und eine Kennzeichnung des zweiten Kommunikationsprotokolls abgelegt sind, und dass die Steuer- und Auswerteeinrichtung (23; 123) dazu ausgebildet ist, die elektronische Schaltung aufzufordern, die Kennzeichnung des ersten Kommunikationsprotokolls und die Kennzeichnung des zweiten Kommunikationsprotokolls zum Steuerungsgerät (20; 120) zu übertragen, wenn das erste Adaptermodul (160) am Steuerungsgerät (20; 120) angeschlossen ist, oder dass die elektronische Schaltung dazu ausgebildet ist, die Übertragung der Kennzeichnung des ersten Kommunikationsprotokolls und der Kennzeichnung des zweiten Kommunikationsprotokolls zum Steuerungsgerät (20; 120) zu veranlassen, wenn das erste Adaptermodul (160) am Steuerungsgerät (20; 120) angeschlossen ist.

5. Steuer- und Datenübertragungsanlage (100; 110) nach einem der Ansprüche 1 bis 4,
**dadurch gekennzeichnet, dass**
in der Speichereinrichtung (22; 122) ein viertes Kommunikationsprotokoll, das sich vom ersten, zweiten und dritten Kommunikationsprotokoll unterscheidet, speicherbar ist, wobei
ein zweites, mit dem Steuerungsgerät (20; 120) verbindbares Adaptermodul (90) vorgesehen ist, welches
einen dritten Verbinder (94) mit mehreren elektrischen Kontakten (80-89), welcher zum elektrischen und mechanischen Zusammenfügen mit einem weiteren ersten Verbinder (24ₙ) des Steuerungsgeräts (20; 120) ausgebildet ist, eine Identifizierungseinrichtung (93), die eine Identifizierung des vierten Kommunikationsprotokolls ermöglicht, und
eine Kommunikationsschnittstelle (91) zum Verbinden wenigstens eines dritten Geräts (41), welches zur Kommunikation gemäß dem vierten Kommunikationsprotokoll ausgebildet ist, über ein drittes Bussystem (51) mit dem zweiten Adaptermodul (90), aufweist, wobei
die Steuer- und Auswerteeinrichtung (23; 123) dazu ausgebildet ist, mit Hilfe der Identifizierungseinrichtung (93) des zweiten Adaptermoduls (90) das zu verwendende vierte Kommunikationsprotokoll zu erkennen, wenn das zweite Adaptermodul (90) an das Steuerungsgerät (20; 120) angeschlossen ist, und das erkannte vierte Kommunikationsprotokoll aus der Speichereinrichtung (22; 122) zu laden und auszuführen , so dass eine Kommunikation zwischen dem wenigstens einen dritten, am zweiten Adaptermodul (90) angeschlossenen Gerät (41) und dem Steuerungsgerät (20; 120) gemäß dem vierten Kommunikationsprotokoll erfolgen kann.

6. Steuer- und Datenübertragungsanlage (100; 110) nach Anspruch 5,
**dadurch gekennzeichnet, dass**
die Steuer- und Auswerteeinrichtung (23; 123) dazu ausgebildet ist, unter Ansprechen auf das erkannte vierte Kommunikationsprotokoll die entsprechenden elektrischen Kontakte des weiteren ersten Verbinders (24ₙ) auszuwählen.

7. Steuer- und Datenübertragungsanlage (100; 110) nach Anspruch 5 oder 6,
**dadurch gekennzeichnet, dass**
die Identifizierungseinrichtung (93) des zweiten Adaptermoduls (90) eine Speichereinrichtung aufweist, in der eine Kennzeichnung des vierten Kommunikationsprotokolls abgelegt ist, und dass
die Steuer- und Auswerteeinrichtung (23, 123) zum Auslesen der Speichereinrichtung der Identifizierungseinrichtung (93) des zweiten Adaptermoduls (90) ausgebildet ist, wenn das zweite Adaptermodul (90) am Steuerungsgerät (20; 120) angeschlossen ist.

8. Steuer- und Datenübertragungsanlage (100; 110) nach einem der Ansprüche 5 bis 7, **dadurch gekennzeichnet, dass**
die Identifizierungseinrichtung (93) des zweiten Adaptermoduls (90) eine elektronische Schaltung aufweist, in der eine Kennzeichnung des vierten Kommunikationsprotokolls abgelegt ist, dass
die Steuer- und Auswerteeinrichtung (23; 123) dazu ausgebildet ist, die elektronische Schaltung des zweiten Adaptermoduls (90) aufzufordern, die Kennzeichnung des vierten Kommunikationsprotokolls zum Steuerungsgerät (20; 120) zu übertragen, wenn das zweite Adaptermodul (90) am Steuerungsgerät (20; 120) angeschlossen ist, oder dass die elektronische Schaltung des zweiten Adaptermoduls (90) dazu ausgebildet ist, die Übertragung der Kennzeichnung des vierten Kommunikationsprotokolls zum Steuerungsgerät (20; 120) zu veranlassen, wenn das zweite Adaptermodul (90) am Steuerungsgerät (20; 120) angeschlossen ist.

9. Steuer- und Datenübertragungsanlage (100; 110) nach einem der Ansprüche 5 oder 6,
**dadurch gekennzeichnet, dass**
die Identifizierungseinrichtung (93) des zweiten Adaptermoduls (90) wenigstens eine elektrische Leitung (31') aufweist, die wenigstens zwei vorbestimmte elektrische Kontakte (80, 81) kurzschließt, wobei die Steuer- und Auswerteeinrichtung (23, 123) dazu ausgebildet ist, die kurzgeschlossenen elektrischen Kontakte (80, 81) zu erfassen und in Abhängigkeit davon das zu verwendende Kommunikationsprotokoll zu erkennen.

10. Steuer- und Datenübertragungsanlage (100; 110) nach einem der Ansprüche 1 bis 9, **dadurch gekennzeichnet, dass**
das erste Adaptermodul (160) eine Einrichtung (164) zur Signalpegelumsetzung gemäß dem zweiten Kommunikationsprotokoll aufweist.

11. Steuer- und Datenübertragungsanlage (100; 110) nach einem der Ansprüche 1 bis 10, **dadurch gekennzeichnet, dass**
die Steuer- und Auswerteeinrichtung (23; 123) dazu ausgebildet ist, zu erkennen, ob an dem wenigstens einen ersten Verbinder (24; 24ₙ; 124) unmittelbar ein Bussystem (200), welches das dritte Kommunikationsprotokoll anwendet, angeschlossen ist, wobei die Steuer- und Auswerteeinrichtung (23; 123) das dritte Kommunikationsprotokoll ausführt, wenn das Bussystem (200), welches das dritte Kommunikationsprotokoll anwendet, an dem wenigstens einen ersten Verbinder (24, 24ₙ; 124) angeschlossen ist.

12. Steuer- und Datenübertragungsanlage (100; 110) nach einem der Ansprüche 1 bis 11, **dadurch gekennzeichnet, dass**
das erste Adaptermodul (160) eine Einrichtung zur Signalpegelumsetzung (32; 162) gemäß dem ersten Kommunikationsprotokoll aufweist, und/oder nach einem der Ansprüche 5 bis 11, dass
das zweite Adaptermodul (90) eine Einrichtung zur Signalpegelumsetzung (92) gemäß dem vierten Kommunikationsprotokoll aufweist.

13. Steuer- und Datenübertragungsanlage (100; 110) nach einem der Ansprüche 5 bis 12, **gekennzeichnet durch**
ein drittes, mit dem Steuerungsgerät (20; 120) verbindbares Adaptermodul (220), welches
einen Verbinder (230) mit mehreren elektrischen Kontakten (240-249), welcher zum elektrischen und mechanischen Zusammenfügen mit dem wenigstens einen ersten Verbinder (24₁, 24ₙ; 124) ausgebildet ist,
eine Identifizierungseinrichtung (250), die eine Identifizierung eines fünften Kommunikationsprotokolls ermöglicht, welches im dritten Adaptermodul (220) speicherbar ist, und
einer Kommunikationsschnittstelle (260) zum Verbinden wenigstens eines Geräts (270), welches zur Kommunikation gemäß dem fünften Kommunikationsprotokoll ausgebildet ist, über ein fünftes Bussystem (280) mit dem dritten Adaptermodul (220), aufweist,
wobei die Steuer- und Auswerteeinrichtung (23; 123) dazu ausgebildet ist, mit Hilfe der Identifizierungseinrichtung (250) das zu verwendende fünfte Kommunikationsprotokoll zu erkennen, wenn das dritte Adaptermodul (220) an das Steuerungsgerät (20; 120) angeschlossen ist, und das erkannte fünfte Kommunikationsprotokoll, welches im Adaptermodul (220) gespeichert ist, auszuführen, so dass eine Kommunikation zwischen dem wenigstens einen, am dritten Adaptermodul (30; 160) angeschlossenen Gerät (270) und dem Steuerungsgerät (20; 120) gemäß dem fünften Kommunikationsprotokoll erfolgen kann.

## Claims

1. A control and data transmission system (100; 110) for supporting various communication protocols, comprising:
- a control device (20; 120) with
a memory device (22; 122) in which at least a first, a second and a third communication protocol can be stored, the first, the second and the third communication protocol being different,
a control and evaluation device (23; 123) which is designed to execute the communication protocols stored in the memory device (22; 122), and
at least one first connector (24₁, 24ₙ; 124) with a plurality of selectable electrical contacts (1₁-10₁, 1ₙ-10ₙ; 130-139) and
- a first adapter module (160), which can be connected to the control device (20; 120), with
a second connector (166) with a plurality of electrical contacts (170-179), which is designed for electrical and mechanical mating with the at least one first connector (24₁, 24ₙ; 124),
an identification device (161) enabling identification of the first and second communication protocols by the control device (120), the identification device (161) comprising at least one electrical line short-circuiting at least two predetermined electrical contacts (170, 171; 180, 181),
a communication interface (163) for connecting at least one first device (140₁₎, which is designed for communication in accordance with the first communication protocol, to the first adapter module (160) via a first bus system (190), and a further communication interface (165) for connecting at least one second device (150₁₎, which is designed for communication in accordance with the second communication protocol, to the first adapter module (160) via a second bus system (191), wherein
the control and evaluation device (23; 123) is designed to detect the shortcircuited electrical contacts (180, 181) with the aid of the identification device (161) and, in dependence thereof, to recognize the first and second communication protocol to be used when the first adapter module (160) is connected to the control device (20; 120), and to load the recognized first and second communication protocol from the memory device (22; 122) and to execute the recognized first and second communication protocol, so that communication between the at least one first device (140₁) connected to the first adapter module (160) and the control device (20; 120) can take place according to the first communication protocol, and furthermore communication between the at least one second device (150₁) connected to the first adapter module (160) and the control device (20; 120) can take place according to the second communication protocol.

2. The control and data transmission system (100; 110) according to claim 1, **characterized in that**
the control and evaluation device (23; 123) is designed to select a first group of electrical contacts (132-135) from the electrical contacts of the first connector (124) in response to the recognized first communication protocol and to select a second group (136-139) of electrical contacts from the electrical contacts of the first connector (124) in response to the recognized second communication protocol, the first and second groups each containing different electrical contacts.

3. The control and data transmission system (100; 110) according to claim 1 or 2, **characterized in that**
the identification device (161) comprises a memory device (167) in which an identification of the first communication protocol and an identification of the second communication protocol are stored, and **in that**
the control and evaluation device (23; 123) is designed to read out the memory device (167) when the first adapter module (160) is connected to the control device (20; 120).

4. The control and data transmission system (100; 110) according to claim 1, 2 or 3,
**characterized in that**
the identification device (161) comprises an electronic circuit, in particular a microcontroller, FPGA or ASIC, in which an identifier of the first communication protocol and an identifier of the second communication protocol are stored, and **in that**
the control and evaluation device (23; 123) is designed to request the electronic circuit to transmit the identification of the first communication protocol and the identification of the second communication protocol to the control device (20; 120) when the first adapter module (160) is connected to the control device (20; 120), or **in that** the electronic circuit is designed to initiate the transmission of the identification of the first communication protocol and the identification of the second communication protocol to the control device (20; 120) when the first adapter module (160) is connected to the control device (20; 120).

5. The control and data transmission system (100; 110) according to one of claims 1 to 4,
**characterized in that**
a fourth communication protocol, which is different from the first, second and third communication protocol, can be stored in the memory device (22; 122), wherein
a second adapter module (90) is provided which can be connected to the control device (20; 120), the second adapter module (90) comprising a third connector (94) with a plurality of electrical contacts (80-89), which is designed for electrical and mechanical mating with a further first connector (24ₙ) of the control device (20; 120),
an identification device (93) enabling identification of the fourth communication protocol, and
a communication interface (91) for connecting at least one third device (41), which is designed for communication in accordance with the fourth communication protocol, to the second adapter module (90) via a third bus system (51), wherein
the control and evaluation device (23; 123) is designed to recognize with the aid of the identification device (93) of the second adapter module (90) the fourth communication protocol to be used when the second adapter module (90) is connected to the control device (20; 120), and to load the recognized fourth communication protocol from the memory device (22; 122) and to execute the recognized fourth communication protocol, so that communication between the at least one third device (41) connected to the second adapter module (90) and the control device (20; 120) can take place in accordance with the fourth communication protocol.

6. The control and data transmission system (100; 110) according to claim 5, **characterized in that**
the control and evaluation device (23; 123) is designed to select the corresponding electrical contacts of the further first connector (24ₙ) in response to the recognized fourth communication protocol.

7. The control and data transmission system (100; 110) according to claim 5 or 6, **characterized in that**
the identification device (93) of the second adapter module (90) has a memory device in which an identification of the fourth communication protocol is stored, and **in that**
the control and evaluation device (23, 123) is designed to read out the memory device of the identification device (93) of the second adapter module (90) when the second adapter module (90) is connected to the control device (20; 120).

8. The control and data transmission system (100; 110) according to one of claims 5 to 7, **characterized in that**
the identification device (93) of the second adapter module (90) comprises an electronic circuit in which an identification of the fourth communication protocol is stored, **in that**
the control and evaluation device (23; 123) is designed to request the electronic circuit of the second adapter module (90) to transmit the identification of the fourth communication protocol to the control device (20; 120) when the second adapter module (90) is connected to the control device (20; 120), or **in that** the electronic circuit of the second adapter module (90) is designed to initiate the transmission of the identification of the fourth communication protocol to the control device (20; 120) when the second adapter module (90) is connected to the control device (20; 120).

9. The control and data transmission system (100; 110) according to one of claims 5 or 6 ,
**characterized in that**
the identification device (93) of the second adapter module (90) comprises at least one electrical line (31') which short-circuits at least two predetermined electrical contacts (80, 81), wherein
the control and evaluation device (23, 123) is designed to detect the shortcircuited electrical contacts (80, 81) and to recognize the communication protocol to be used in dependence thereof.

10. The control and data transmission system (100; 110) according to one of claims 1 to 9, **characterized in that**
the first adapter module (160) comprises a device (164) for signal level conversion according to the second communication protocol.

11. The control and data transmission system (100; 110) according to one of claims 1 to 10, **characterized in that**
the control and evaluation device (23; 123) is designed to recognize whether a bus system (200) which uses the third communication protocol is directly connected to the at least one first connector (24; 24ₙ; 124), the control and evaluation device (23; 123) executing the third communication protocol if the bus system (200) which uses the third communication protocol is connected to the at least one first connector (24, 24ₙ; 124).

12. The control and data transmission system (100; 110) according to one of claims 1 to 11, **characterized in that**
the first adapter module (160) comprises a device for signal level conversion (32; 162) according to the first communication protocol, and/or according to one of claims 5 to 11, that
the second adapter module (90) comprises a device for signal level conversion (92) according to the fourth communication protocol.

13. The control and data transmission system (100; 110) according to one of claims 5 to 12, **characterized by**
a third adapter module (220) connectable to the control device (20; 120), the third adapter module (220)comprising
a connector (230) with a plurality of electrical contacts (240-249), which is designed for electrical and mechanical mating with the at least one first connector (24₁, 24ₙ; 124),
an identification device (250) which enables identification of a fifth communication protocol which can be stored in the third adapter module (220), and
a communication interface (260) for connecting at least one device (270), which is designed for communication in accordance with the fifth communication protocol, to the third adapter module (220) via a fifth bus system (280), wherein the control and evaluation device (23; 123) is designed to recognize the fifth communication protocol to be used with the aid of the identification device (250) when the third adapter module (220) is connected to the control device (20; 120), and to execute the recognized fifth communication protocol, which is stored in the adapter module (220), so that communication between the at least one device (270) connected to the third adapter module (30; 160) and the control device (20; 120) can take place in accordance with the fifth communication protocol.

## Revendications

1. Installation de commande et de transmission de données (100 ; 110) permettant de prendre en charge différents protocoles de communication, comprenant :
- un appareil de commande (20 ; 120) comportant
un dispositif mémoire (22 ; 122) dans lequel au moins un premier, un deuxième et un troisième protocole de communication peuvent être mémorisés, les premier, deuxième et troisième protocoles de communication étant différents, un dispositif de commande et d'évaluation (23 ; 123) conçu pour exécuter les protocoles de communication mémorisés dans le dispositif mémoire (22 ; 122), et
au moins un premier connecteur (24₁, 24ₙ ; 124) comportant plusieurs contacts électriques (1₁-10₁, 1ₙ-10ₙ ; 130-139) pouvant être sélectionnés et
- un premier module adaptateur (160) pouvant être connecté à l'appareil de commande (20 ; 120) comportant
un deuxième connecteur (166) comportant plusieurs contacts électriques (170-179), lesquels sont conçus pour être connectés électriquement et relier mécaniquement à l'au moins un premier connecteur (24₁, 24ₙ ; 124),
un dispositif d'identification (161), lequel permet l'identification des premier et deuxième protocoles de communication par l'appareil de commande (120), le dispositif d'identification (161) comportant au moins une ligne électrique, laquelle court-circuite au moins deux contacts électriques (170, 171 ; 180, 181) prédéterminés,
une interface de communication (163) permettant de connecter au moins un premier appareil (140₁), lequel est conçu pour communiquer conformément au premier protocole de communication, par l'intermédiaire d'un premier système de bus (190), avec le premier module adaptateur (160) et une autre interface de communication (165) pour connecter au moins un deuxième appareil (150₁), lequel est conçu pour communiquer conformément au deuxième protocole de communication, par l'intermédiaire d'un deuxième système de bus (191), avec le premier module adaptateur (160),
dans laquelle le dispositif de commande et d'évaluation (23 ; 123) est conçu pour détecter, à l'aide du dispositif d'identification (161), les contacts électriques (180, 181) court-circuités et, en fonction de cela, pour détecter le premier et le deuxième protocole de communication à utiliser lorsque le premier module adaptateur (160) est connecté à l'appareil de commande (20 ; 120), et pour charger et exécuter le premier et le deuxième protocole de communication détectés à partir du dispositif mémoire (22 ; 122) de telle sorte que la communication peut avoir lieu entre l'au moins un premier appareil (140₁) connecté au premier module adaptateur (160) et l'appareil de commande (20 ; 120) conformément au premier protocole de communication et en outre la communication peut avoir lieu entre l'au moins un deuxième appareil (150₁) connecté au premier module adaptateur (160) et l'appareil de commande (20 ; 120) conformément au deuxième protocole de communication.

2. Installation de commande et de transmission de données (100 ; 110) selon la revendication 1,
**caractérisée en ce que**
le dispositif de commande et d'évaluation (23 ; 123) est conçu pour sélectionner, en réponse au premier protocole de communication détecté, un premier groupe de contacts électriques (132-135) parmi les contacts électriques du premier connecteur (124) et pour sélectionner, en réponse au deuxième protocole de communication détecté, un deuxième groupe (136-139) de contacts électriques parmi les contacts électriques du premier connecteur (124), dans laquelle les premier et deuxième groupes contiennent respectivement des contacts électriques différents.

3. Installation de commande et de transmission de données (100 ; 110) selon la revendication 1 ou 2,
**caractérisée en ce que**
le dispositif d'identification (161) comporte un dispositif mémoire (167) dans lequel sont mémorisées une identification du premier protocole de communication et une identification du deuxième protocole de communication, et **en ce que** le dispositif de commande et d'évaluation (23 ; 123) est conçu pour lire le dispositif mémoire (167) lorsque le premier module adaptateur (160) est connecté à l'appareil de commande (20 ; 120).

4. Installation de commande et de transmission de données (100 ; 110) selon la revendication 1, 2 ou 3,
**caractérisée en ce que**
le dispositif d'identification (161) comporte un circuit électronique, en particulier un microcontrôleur, FPGA ou ASIC, dans lequel sont mémorisées l'identification du premier protocole de communication et l'identification du deuxième protocole de communication, et **en ce que** le dispositif de commande et d'évaluation (23 ; 123) est conçu pour demander au circuit électronique de transmettre l'identification du premier protocole de communication et l'identification du deuxième protocole de communication à l'appareil de commande (20 ; 120) lorsque le premier module adaptateur (160) est connecté à l'appareil de commande (20 ; 120), ou **en ce que** le circuit électronique est conçu pour provoquer la transmission de l'identification du premier protocole de communication et de l'identification du deuxième protocole de communication à l'appareil de commande (20 ; 120) lorsque le premier module adaptateur (160) est connecté à l'appareil de commande (20 ; 120).

5. Installation de commande et de transmission de données (100 ; 110) selon l'une quelconque des revendications 1 à 4,
**caractérisée en ce qu'**
un quatrième protocole de communication, lequel diffère du premier, du deuxième et du troisième protocole de communication, peut être mémorisé dans le dispositif mémoire (22 ; 122), dans laquelle
un deuxième module adaptateur (90) pouvant être connecté à l'appareil de commande (20 ; 120) comprend
un troisième connecteur (94), comportant plusieurs contacts électriques (80-89), lequel est conçu pour être connecté électriquement et être relié mécaniquement, à un autre premier connecteur (24ₙ) de l'appareil de commande (20 ; 120), un dispositif d'identification (93), lequel permet l'identification du quatrième protocole de communication, et
une interface de communication (91) permettant de connecter au moins un troisième appareil (41), lequel est conçu pour communiquer conformément au quatrième protocole de communication, par l'intermédiaire d'un troisième système de bus (51), au deuxième module adaptateur (90), dans laquelle
le dispositif de commande et d'évaluation (23 ; 123) est conçu pour détecter, à l'aide du dispositif d'identification (93) du deuxième module adaptateur (90), le quatrième protocole de communication à utiliser lorsque le deuxième module adaptateur (90) est connecté à l'appareil de commande (20 ; 120), et pour charger et exécuter le quatrième protocole de communication reconnu à partir du dispositif mémoire (22 ; 122) de telle sorte que la communication entre l'au moins un troisième appareil (41) connecté au deuxième module adaptateur (90) et l'appareil de commande (20 ; 120) peut avoir lieu conformément au quatrième protocole de communication.

6. Installation de commande et de transmission de données (100 ; 110) selon la revendication 5,
**caractérisée en ce que**
le dispositif de commande et d'évaluation (23 ; 123) est conçu pour sélectionner, en réponse au quatrième protocole de communication détecté, les contacts électriques correspondants de l'autre premier connecteur (24ₙ).

7. Installation de commande et de transmission de données (100 ; 110) selon la revendication 5 ou 6,
**caractérisée en ce que**
le dispositif d'identification (93) du deuxième module adaptateur (90) comporte un dispositif mémoire dans lequel est mémorisée une identification du quatrième protocole de communication, et **en ce que**
le dispositif de commande et d'évaluation (23, 123) est conçu pour lire le dispositif mémoire du dispositif d'identification (93) du deuxième module adaptateur (90) lorsque le deuxième module adaptateur (90) est connecté à l'appareil de commande (20 ; 120).

8. Installation de commande et de transmission de données (100 ; 110) selon l'une quelconque des revendications 5 à 7, **caractérisée en ce que**
le dispositif d'identification (93) du deuxième module adaptateur (90) comporte un circuit électronique dans lequel est mémorisée une identification du quatrième protocole de communication, **en ce que**
le dispositif de commande et d'évaluation (23 ; 123) est conçu pour demander au circuit électronique du deuxième module adaptateur (90) de transmettre l'identification du quatrième protocole de communication à l'appareil de commande (20 ; 120) lorsque le deuxième module adaptateur (90) est connecté à l'appareil de commande (20 ; 120), ou **en ce que** le circuit électronique du deuxième module adaptateur (90) est conçu pour provoquer la transmission de l'identification du quatrième protocole de communication à l'appareil de commande (20 ; 120) lorsque le deuxième module adaptateur (90) est connecté à l'appareil de commande (20 ; 120).

9. Installation de commande et de transmission de données (100 ; 110) selon l'une quelconque des revendications 5 ou 6,
**caractérisée en ce que**
le dispositif d'identification (93) du deuxième module adaptateur (90) comporte au moins une ligne électrique (31'), laquelle court-circuite au moins deux contacts électriques (80, 81) prédéterminés, dans laquelle
le dispositif de commande et d'évaluation (23, 123) est conçu pour détecter les contacts électriques (80, 81) court-circuités et, en fonction de cela, pour détecter le protocole de communication à utiliser.

10. Installation de commande et de transmission de données (100 ; 110) selon l'une quelconque des revendications 1 à 9, **caractérisée en ce que**
le premier module adaptateur (160) comporte un dispositif (164) de conversion de niveau de signal conformément au deuxième protocole de communication.

11. Installation de commande et de transmission de données (100 ; 110) selon l'une quelconque des revendications 1 à 10, **caractérisée en ce que**
le dispositif de commande et d'évaluation (23 ; 123) est conçu pour détecter si l'au moins un premier connecteur (24 ; 24ₙ ; 124) est directement connecté à un système de bus (200), lequel utilise le troisième protocole de communication, le dispositif de commande et d'évaluation (23 ; 123) exécutant le troisième protocole de communication lorsque le système de bus (200), lequel utilise le troisième protocole de communication est connecté à l'au moins un premier connecteur (24, 24ₙ ; 124).

12. Installation de commande et de transmission de données (100 ; 110) selon l'une quelconque des revendications 1 à 11, **caractérisée en ce que**
le premier module adaptateur (160) comporte un dispositif de conversion de niveau de signal (32 ; 162) conformément au premier protocole de communication, et/ou selon l'une quelconque des revendications 5 à 11, **en ce que**
le deuxième module adaptateur (90) comporte un dispositif de conversion de niveau de signal (92) conformément au quatrième protocole de communication.

13. Installation de commande et de transmission de données (100 ; 110) selon l'une quelconque des revendications 5 à 12, **caractérisée par**
un troisième module adaptateur (220) pouvant être connecté à l'appareil de commande (20 ; 120), lequel comporte
un connecteur (230) comportant plusieurs contacts électriques (240-249), lequel est conçu pour être connecté électriquement et relié mécaniquement à l'au moins un premier connecteur (24₁, 24ₙ ; 124),
un dispositif d'identification (250), lequel permet l'identification d'un cinquième protocole de communication, lequel peut être mémorisé dans le troisième module adaptateur (220), et
une interface de communication (260) pour connecter l'au moins un appareil (270), lequel est conçu pour communiquer conformément au cinquième protocole de communication, par l'intermédiaire d'un cinquième système de bus (280), au troisième module adaptateur (220),
dans laquelle le dispositif de commande et d'évaluation (23 ; 123) est conçu pour détecter, à l'aide du dispositif d'identification (250), le cinquième protocole de communication à utiliser lorsque le troisième module adaptateur (220) est connecté à l'appareil de commande (20 ; 120), et pour exécuter le cinquième protocole de communication détecté, lequel est mémorisé dans le module adaptateur (220), de telle sorte que la communication entre l'au moins un appareil (270) connecté au troisième module adaptateur (30 ; 160) et l'appareil de commande (20 ; 120) peut avoir lieu conformément au cinquième protocole de communication.
